# EUROPEAN PATENT APPLICATION

(11) **EP 4 583 632 A1**
(43) Date of publication of application: **09.07.2025**
(21) Application number: 23876513.5
(22) Date of filing: 25.09.2023
(51) Int. Cl.: H04W 84/12, H04W 76/10

(54) **SENSING METHOD AND COMMUNICATION APPARATUS**

(30) Priority: 10.10.2022 CN 202211234899
(71) Applicant: Huawei Technologies Co., Ltd., Shenzhen, Guangdong 518129 (CN)
(72) Inventor: NAREN, Gerile, Shenzhen, Guangdong 518129 (CN); DU, Rui, Shenzhen, Guangdong 518129 (CN); HU, Mengshi, Shenzhen, Guangdong 518129 (CN); HAN, Xiao, Shenzhen, Guangdong 518129 (CN); LI, Yunbo, Shenzhen, Guangdong 518129 (CN)
(74) Representative: Gill Jennings & Every LLP
(86) International application number: PCT/CN2023/120970
(87) International publication number: WO 2024/078309

(57) **Abstract**

This application relates to the communication field, and in particular, to a sensing by proxy method and a communication apparatus. The solution may be applied to a WLAN system that supports 802.11 series protocols such as a next-generation Wi-Fi protocol of IEEE 802.11ax, for example, 802.11be, Wi-Fi 7, or EHT, and a next-generation protocol of the 802.11be or Wi-Fi 8, and may be further applied to a UWB-based wireless personal area network system and a sensing (sensing) system, for example, a 802.11bf protocol. In the method, an SBP responder may determine, based on a result of a sensing measurement setup of a sensing responder, whether to accept an SBP request, and accept the SBP request when the result of the sensing measurement setup is successful, to increase a success rate of an SBP setup, thereby improving sensing efficiency.

## Description

This application claims priority to Chinese Patent Application No. 202211234899.4, filed with the China National Intellectual Property Administration on October 10, 2022 and entitled "SENSING METHOD AND COMMUNICATION APPARATUS", which is incorporated herein by reference in its entirety.

### TECHNICAL FIELD

This application relates to the communication field, and more specifically, to a sensing method and a communication apparatus.

### BACKGROUND

Sensing by proxy (sensing by proxy, SBP) means that a station may request another station to perform wireless local area network (wireless local area network, WLAN) sensing and request the another station to feed back a sensing result to the station. The station that initiates an SBP procedure is referred to as an SBP initiator (SBP initiator), and the requested station participates in the SBP as a proxy (proxy). The requested station is referred to as an SBP responder (SBP responder), and the requested station is also a sensing initiator (sensing initiator) in the SBP sensing procedure. One or more parties participating in the sensing procedure initiated by the SBP responder are sensing responders (sensing responder).

A current SBP procedure is mainly designed for a low frequency band (for example, a frequency band below 7 GHz), and a success rate of a sensing setup is low, affecting sensing efficiency.

### SUMMARY

This application provides a sensing method and a communication apparatus. An SBP responder may determine, based on a result of a sensing measurement setup of a sensing responder, whether to accept an SBP request, and accept the SBP request when the result of the sensing measurement setup is successful, to increase a success rate of an SBP setup, thereby improving sensing efficiency.

According to a first aspect, a sensing method is provided. The method may be performed by an SBP responder, or may be performed by a component (for example, a chip, a circuit, or a module) configured in the SBP responder. This is not limited in this application.

The method includes: An SBP responder receives a first message from a sensing responder, where the first message includes information about whether the sensing responder accepts a first sensing measurement setup; and the SBP responder sends a second message to an SBP initiator, where the second message includes information about whether first SBP is successfully established, and the second message is determined based on the first message.

Based on the foregoing solution, the SBP responder may determine, based on a result of the sensing measurement setup of the sensing responder, whether to accept an SBP request, and accept the SBP request when the result of the sensing measurement setup is successful, to increase a success rate of an SBP setup, thereby improving sensing efficiency.

With reference to the first aspect, in some implementations of the first aspect, the method further includes: The SBP responder receives a third message from the SBP initiator, where the third message is used to request to establish the first SBP, and the third message includes a configuration parameter of the first sensing measurement setup; and the SBP responder sends a fourth message to the sensing responder, where the fourth message is used to initiate the first sensing measurement setup to the sensing responder, and the fourth message is determined based on the third message.

Based on the foregoing solution, the SBP initiator may request, in the third message, the configuration parameter of the sensing measurement setup. Further, the SBP responder may determine, based on the configuration parameter, a parameter for performing the sensing measurement setup with the sensing responder. In this way, the SBP initiator can control and manage an SBP procedure more flexibly and comprehensively.

With reference to the first aspect, in some implementations of the first aspect, the configuration parameter includes first information, and the first information indicates that a type of the first SBP is bistatic with coordination.

With reference to the first aspect, in some implementations of the first aspect, the configuration parameter includes second information, the second information indicates information about a first sensing responder and information about a second sensing responder, the first sensing responder is at least one that is of the sensing responders and that is used as a sensing transmitter, and the second sensing responder is at least one that is of the sensing responders and that is used as a sensing receiver.

With reference to the first aspect, in some implementations of the first aspect, the information about the first sensing responder includes at least one of the following: a number of first sensing responders, whether the number of the first sensing responders needs to be met, an address of the first sensing responder, an identifier of the first sensing responder, a number of preferred first sensing responders, and a list of the preferred first sensing responders; and similarly, the information about the second sensing responder includes at least one of the following: a number of second sensing responders, whether the number of the second sensing responders needs to be met, an address of the second sensing responder, an identifier of the second sensing responder, a number of preferred second sensing responders, and a list of the preferred second sensing responders.

With reference to the first aspect, in some implementations of the first aspect, the configuration parameter includes third information, and the third information indicates a correspondence between the first sensing responder and the second sensing responder.

With reference to the first aspect, in some implementations of the first aspect, the configuration parameter includes fourth information, and the fourth information indicates that the type of the first SBP is monostatic with coordination.

With reference to the first aspect, in some implementations of the first aspect, the configuration parameter includes fifth information, and the fifth information indicates the sensing responders to perform sensing measurements simultaneously or indicates the sensing responders to perform sensing measurements in sequence.

With reference to the first aspect, in some implementations of the first aspect, the configuration parameter includes sixth information, and the sixth information indicates the SBP responder whether to participate in monostatic sensing.

With reference to the first aspect, in some implementations of the first aspect, the configuration parameter includes seventh information, and the seventh information indicates that the type of the first SBP is a monostatic type.

For example, the seventh information is carried in a measurement setup control (measurement setup control) field in a sensing measurement setup element (measurement setup element).

With reference to the first aspect, in some implementations of the first aspect, the configuration parameter includes eighth information, and the eighth information indicates information related to a feedback of a sensing measurement result.

Optionally, the information related to the feedback of the sensing measurement result includes at least one of the following: feeding back after each measurement ends or feeding back after a plurality of measurements end, feeding back a sensing measurement result of one sensing responder each time or feeding back sensing measurement results of a plurality of sensing responders each time, feeding back whether a report includes location configuration information of the sensing responder, feeding back whether the report includes an antenna orientation of the sensing responder, and feeding back whether the report includes a time when the sensing measurement occurs.

With reference to the first aspect, in some implementations of the first aspect, the method further includes: The SBP responder sends a fifth message to the SBP initiator, where the fifth message is used to report the sensing measurement result.

Optionally, the fifth message may be determined based on the eighth information.

Optionally, the type of the first SBP is bistatic with coordination, the fifth message includes ninth information, and the ninth information indicates a sensing transmitter and a sensing receiver corresponding to the sensing measurement result.

With reference to the first aspect, in some implementations of the first aspect, the method further includes: If the first SBP is successfully established, the SBP responder starts a timer after the second message is sent, and sets start duration of the timer to first duration; and the SBP responder terminates the first SBP when the timer expires.

Optionally, the configuration parameter includes tenth information, and the tenth information indicates the first duration.

With reference to the first aspect, in some implementations of the first aspect, the method further includes: The SBP responder sends a sixth message to the SBP initiator, where the sixth message is used to terminate the first SBP.

Optionally, the sixth message includes eleventh information, and the eleventh information indicates to terminate all SBP of a bistatic with coordination type, or indicates to terminate all SBP of a monostatic type.

With reference to the first aspect, in some implementations of the first aspect, if the first SBP fails to be established, the second message further includes a recommended configuration parameter for the sensing measurement setup.

According to a second aspect, a sensing method is provided. The method may be performed by an SBP initiator, or may be performed by a component (for example, a chip, a circuit, or a module) configured in the SBP initiator. This is not limited in this application.

The method includes: An SBP initiator sends a third message to an SBP responder, where the third message is used to request to establish first SBP, and the third message includes a configuration parameter of a first sensing measurement setup; and the SBP initiator receives a second message from the SBP responder, where the second message includes information about whether the first SBP is successfully established, the second message is determined based on a first message, and the first message includes information about whether a sensing responder accepts the first sensing measurement setup.

Based on the foregoing solution, the SBP responder may determine, based on a result of the sensing measurement setup of the sensing responder, whether to accept an SBP request, and accept the SBP request when the result of the sensing measurement setup is successful, to increase a success rate of an SBP setup, thereby improving sensing efficiency.

In addition, the SBP initiator may request, in the third message, the configuration parameter of the sensing measurement setup. Further, the SBP responder may determine, based on the configuration parameter, a parameter for performing the sensing measurement setup with the sensing responder. In this way, the SBP initiator can control and manage an SBP procedure more flexibly and comprehensively.

With reference to the second aspect, in some implementations of the second aspect, the configuration parameter includes first information, and the first information indicates that a type of the first SBP is bistatic with coordination.

With reference to the second aspect, in some implementations of the second aspect, the configuration parameter includes second information, the second information indicates information about a first sensing responder and information about a second sensing responder, the first sensing responder is at least one that is of the sensing responders and that is used as a sensing transmitter, and the second sensing responder is at least one that is of the sensing responders and that is used as a sensing receiver.

With reference to the second aspect, in some implementations of the second aspect, the information about the first sensing responder includes at least one of the following: a number of first sensing responders, whether the number of the first sensing responders needs to be met, an address of the first sensing responder, an identifier of the first sensing responder, a number of preferred first sensing responders, and a list of the preferred first sensing responders; and similarly, the information about the second sensing responder includes at least one of the following: a number of second sensing responders, whether the number of the second sensing responders needs to be met, an address of the second sensing responder, an identifier of the second sensing responder, a number of preferred second sensing responders, and a list of the preferred second sensing responders.

With reference to the second aspect, in some implementations of the second aspect, the configuration parameter includes third information, and the third information indicates a correspondence between the first sensing responder and the second sensing responder.

With reference to the second aspect, in some implementations of the second aspect, the configuration parameter includes fourth information, and the fourth information indicates that the type of the first SBP is monostatic with coordination.

With reference to the second aspect, in some implementations of the second aspect, the configuration parameter includes fifth information, and the fifth information indicates the sensing responders to perform sensing measurements simultaneously or indicates the sensing responders to perform sensing measurements in sequence.

With reference to the second aspect, in some implementations of the second aspect, the configuration parameter includes sixth information, and the sixth information indicates the SBP responder whether to participate in monostatic sensing.

With reference to the second aspect, in some implementations of the second aspect, the configuration parameter includes seventh information, and the seventh information indicates that the type of the first SBP is a monostatic type.

For example, the seventh information is carried in a measurement setup control (measurement setup control) field in a sensing measurement setup element (measurement setup element).

With reference to the second aspect, in some implementations of the second aspect, the configuration parameter includes eighth information, and the eighth information indicates information related to a feedback of a sensing measurement result.

Optionally, the information related to the feedback of the sensing measurement result includes at least one of the following: feeding back after each measurement ends or feeding back after a plurality of measurements end, feeding back a sensing measurement result of one sensing responder each time or feeding back sensing measurement results of a plurality of sensing responders each time, feeding back whether a report includes location configuration information of the sensing responder, feeding back whether the report includes an antenna orientation of the sensing responder, and feeding back whether the report includes a time when the sensing measurement occurs.

With reference to the second aspect, in some implementations of the second aspect, the method further includes: The SBP initiator receives a fifth message from the SBP responder, where the fifth message is used to report the sensing measurement result.

Optionally, the fifth message may be determined based on the eighth information.

Optionally, the type of the first SBP is bistatic with coordination, the fifth message includes ninth information, and the ninth information indicates a sensing transmitter and a sensing receiver corresponding to the sensing measurement result.

With reference to the second aspect, in some implementations of the second aspect, the method further includes: If the first SBP is successfully established, the SBP initiator starts a timer after the second message is received, and sets start duration of the timer to first duration; and the SBP initiator terminates the first SBP when the timer expires.

Optionally, the configuration parameter includes tenth information, and the tenth information indicates the first duration.

With reference to the second aspect, in some implementations of the second aspect, the method further includes: The SBP initiator sends a sixth message to the SBP responder, where the sixth message is used to terminate the first SBP.

Optionally, the sixth message includes eleventh information, and the eleventh information indicates to terminate all SBP of a bistatic with coordination type, or indicates to terminate all SBP of a monostatic type.

With reference to the second aspect, in some implementations of the second aspect, if the first SBP fails to be established, the second message further includes a recommended configuration parameter for the sensing measurement setup.

According to a third aspect, a sensing method is provided. The method may be performed by an SBP responder, or may be performed by a component (for example, a chip, a circuit, or a module) configured in the SBP responder. This is not limited in this application.

The method includes: An SBP responder generates a fifth message, where the fifth message is used to report a sensing measurement result; and the SBP responder sends the fifth message to an SBP initiator, where that the SBP responder sends the fifth message to an SBP initiator includes: The SBP responder sends the fifth message to the SBP initiator after obtaining the sensing measurement result of any sensing responder; or the SBP responder sends the fifth message to the SBP initiator after obtaining sensing measurement results of a plurality of sensing responders.

Based on the foregoing solution, the SBP responder may report the sensing measurement result to the SBP initiator in different manners, to improve flexibility of feeding back the sensing result, thereby improving sensing efficiency.

Optionally, the fifth message may be determined based on eighth information, and the eighth information indicates information related to a feedback of the sensing measurement result.

Optionally, the information related to the feedback of the sensing measurement result includes at least one of the following: feeding back after each measurement ends or feeding back after a plurality of measurements end, feeding back a sensing measurement result of one sensing responder each time or feeding back sensing measurement results of a plurality of sensing responders each time, feeding back whether a report includes location configuration information of the sensing responder, feeding back whether the report includes an antenna orientation of the sensing responder, and feeding back whether the report includes a time when the sensing measurement occurs.

Optionally, the type of the first SBP is bistatic with coordination, the fifth message includes ninth information, and the ninth information indicates a sensing transmitter and a sensing receiver corresponding to the sensing measurement result.

According to a fourth aspect, a sensing method is provided. The method may be performed by an SBP responder, or may be performed by a component (for example, a chip, a circuit, or a module) configured in the SBP responder. This is not limited in this application.

The method includes: If first SBP is successfully established, the SBP responder starts a timer after a second message is sent, and sets start duration of the timer to first duration; and the SBP responder terminates the first SBP when the timer expires.

Based on the foregoing solution, the SBP responder may terminate the first SBP by using the timer, to reduce an SBP termination procedure, thereby reducing signaling overheads.

Optionally, the method further includes: The SBP responder receives tenth information from an SBP initiator, where the tenth information indicates the first duration.

According to a fifth aspect, a sensing method is provided. The method may be performed by an SBP initiator, or may be performed by a component (for example, a chip, a circuit, or a module) configured in the SBP initiator. This is not limited in this application.

The method includes: If first SBP is successfully established, the SBP initiator starts a timer after a second message is received, and sets start duration of the timer to first duration; and the SBP initiator terminates the first SBP when the timer expires.

Based on the foregoing solution, the SBP initiator may terminate the first SBP by using the timer, to reduce an SBP termination procedure, thereby reducing signaling overheads.

Optionally, the method further includes: The SBP initiator sends tenth information to an SBP responder, where the tenth information indicates the first duration.

According to a sixth aspect, a communication apparatus is provided. The communication apparatus may be an SBP responder, or may be a component (for example, a chip, a circuit, or a module) configured in the SBP responder. This is not limited in this application.

The communication apparatus includes: a transceiver unit, configured to receive a first message from a sensing responder, where the first message includes information about whether the sensing responder accepts a first sensing measurement setup; and the transceiver unit is further configured to send a second message to an SBP initiator, where the second message includes information about whether first SBP is successfully established, and the second message is determined based on the first message.

With reference to the sixth aspect, in some implementations of the sixth aspect, the transceiver unit is further configured to: receive a third message from the SBP initiator, where the third message is used to request to establish the first SBP, and the third message includes a configuration parameter of the first sensing measurement setup; and send a fourth message to the sensing responder, where the fourth message is used to initiate the first sensing measurement setup to the sensing responder, and the fourth message is determined based on the third message.

With reference to the sixth aspect, in some implementations of the sixth aspect, the configuration parameter includes first information, and the first information indicates that a type of the first SBP is bistatic with coordination.

With reference to the sixth aspect, in some implementations of the sixth aspect, the configuration parameter includes second information, the second information indicates information about a first sensing responder and information about a second sensing responder, the first sensing responder is at least one that is of the sensing responders and that is used as a sensing transmitter, and the second sensing responder is at least one that is of the sensing responders and that is used as a sensing receiver.

With reference to the sixth aspect, in some implementations of the sixth aspect, the information about the first sensing responder includes at least one of the following: a number of first sensing responders, whether the number of the first sensing responders needs to be met, an address of the first sensing responder, an identifier of the first sensing responder, a number of preferred first sensing responders, and a list of the preferred first sensing responders; and similarly, the information about the second sensing responder includes at least one of the following: a number of second sensing responders, whether the number of the second sensing responders needs to be met, an address of the second sensing responder, an identifier of the second sensing responder, a number of preferred second sensing responders, and a list of the preferred second sensing responders.

With reference to the sixth aspect, in some implementations of the sixth aspect, the configuration parameter includes third information, and the third information indicates a correspondence between the first sensing responder and the second sensing responder.

With reference to the sixth aspect, in some implementations of the sixth aspect, the configuration parameter includes fourth information, and the fourth information indicates that the type of the first SBP is monostatic with coordination.

With reference to the sixth aspect, in some implementations of the sixth aspect, the configuration parameter includes fifth information, and the fifth information indicates the sensing responders to perform sensing measurements simultaneously or indicates the sensing responders to perform sensing measurements in sequence.

With reference to the sixth aspect, in some implementations of the sixth aspect, the configuration parameter includes sixth information, and the sixth information indicates the SBP responder whether to participate in monostatic sensing.

With reference to the sixth aspect, in some implementations of the sixth aspect, the configuration parameter includes seventh information, and the seventh information indicates that the type of the first SBP is a monostatic type.

For example, the seventh information is carried in a measurement setup control (measurement setup control) field in a sensing measurement setup element (measurement setup element).

With reference to the sixth aspect, in some implementations of the sixth aspect, the configuration parameter includes eighth information, and the eighth information indicates information related to a feedback of a sensing measurement result.

Optionally, the information related to the feedback of the sensing measurement result includes at least one of the following: feeding back after each measurement ends or feeding back after a plurality of measurements end, feeding back a sensing measurement result of one sensing responder each time or feeding back sensing measurement results of a plurality of sensing responders each time, feeding back whether a report includes location configuration information of the sensing responder, feeding back whether the report includes an antenna orientation of the sensing responder, and feeding back whether the report includes a time when the sensing measurement occurs.

With reference to the sixth aspect, in some implementations of the sixth aspect, the transceiver unit is further configured to send a fifth message to the SBP initiator, where the fifth message is used to report the sensing measurement result.

Optionally, the fifth message may be determined based on the eighth information.

Optionally, the type of the first SBP is bistatic with coordination, the fifth message includes ninth information, and the ninth information indicates a sensing transmitter and a sensing receiver corresponding to the sensing measurement result.

With reference to the sixth aspect, in some implementations of the sixth aspect, the communication apparatus further includes: a processing unit, configured to: if the first SBP is successfully established, start a timer after the second message is sent, and set start duration of the timer to the first duration, where the processing unit is further configured to terminate the first SBP when the timer expires.

Optionally, the configuration parameter includes tenth information, and the tenth information indicates the first duration.

With reference to the sixth aspect, in some implementations of the sixth aspect, the transceiver unit is further configured to send a sixth message to the SBP initiator, where the sixth message is used to terminate the first SBP.

Optionally, the sixth message includes eleventh information, and the eleventh information indicates to terminate all SBP of a bistatic with coordination type, or indicates to terminate all SBP of a monostatic type.

With reference to the sixth aspect, in some implementations of the sixth aspect, if the first SBP fails to be established, the second message further includes a recommended configuration parameter for the sensing measurement setup.

According to a seventh aspect, a communication apparatus is provided. The communication apparatus may be an SBP initiator, or may be a component (for example, a chip, a circuit, or a module) configured in the SBP initiator. This is not limited in this application.

The communication apparatus includes: a transceiver unit, configured to send a third message to an SBP responder, where the third message is used to request to establish first SBP, and the third message includes a configuration parameter of a first sensing measurement setup; and the transceiver unit is further configured to receive a second message from the SBP responder, where the second message includes information about whether the first SBP is successfully established, the second message is determined based on a first message, and the first message includes information about whether a sensing responder accepts the first sensing measurement setup.

With reference to the seventh aspect, in some implementations of the seventh aspect, the configuration parameter includes first information, and the first information indicates that a type of the first SBP is bistatic with coordination.

With reference to the seventh aspect, in some implementations of the seventh aspect, the configuration parameter includes second information, the second information indicates information about a first sensing responder and information about a second sensing responder, the first sensing responder is at least one that is of the sensing responders and that is used as a sensing transmitter, and the second sensing responder is at least one that is of the sensing responders and that is used as a sensing receiver.

With reference to the seventh aspect, in some implementations of the seventh aspect, the information about the first sensing responder includes at least one of the following: a number of first sensing responders, whether the number of the first sensing responders needs to be met, an address of the first sensing responder, an identifier of the first sensing responder, a number of preferred first sensing responders, and a list of the preferred first sensing responders; and similarly, the information about the second sensing responder includes at least one of the following: a number of second sensing responders, whether the number of the second sensing responders needs to be met, an address of the second sensing responder, an identifier of the second sensing responder, a number of preferred second sensing responders, and a list of the preferred second sensing responders.

With reference to the seventh aspect, in some implementations of the seventh aspect, the configuration parameter includes third information, and the third information indicates a correspondence between the first sensing responder and the second sensing responder.

With reference to the seventh aspect, in some implementations of the seventh aspect, the configuration parameter includes fourth information, and the fourth information indicates that the type of the first SBP is monostatic with coordination.

With reference to the seventh aspect, in some implementations of the seventh aspect, the configuration parameter includes fifth information, and the fifth information indicates the sensing responders to perform sensing measurements simultaneously or indicates the sensing responders to perform sensing measurements in sequence.

With reference to the seventh aspect, in some implementations of the seventh aspect, the configuration parameter includes sixth information, and the sixth information indicates the SBP responder whether to participate in monostatic sensing.

With reference to the seventh aspect, in some implementations of the seventh aspect, the configuration parameter includes seventh information, and the seventh information indicates that the type of the first SBP is a monostatic type.

For example, the seventh information is carried in a measurement setup control (measurement setup control) field in a sensing measurement setup element (measurement setup element).

With reference to the seventh aspect, in some implementations of the seventh aspect, the configuration parameter includes eighth information, and the eighth information indicates information related to a feedback of a sensing measurement result.

Optionally, the information related to the feedback of the sensing measurement result includes at least one of the following: feeding back after each measurement ends or feeding back after a plurality of measurements end, feeding back a sensing measurement result of one sensing responder each time or feeding back sensing measurement results of a plurality of sensing responders each time, feeding back whether a report includes location configuration information of the sensing responder, feeding back whether the report includes an antenna orientation of the sensing responder, and feeding back whether the report includes a time when the sensing measurement occurs.

With reference to the seventh aspect, in some implementations of the seventh aspect, the transceiver unit is further configured to receive a fifth message from the SBP responder, where the fifth message is used to report the sensing measurement result.

Optionally, the fifth message may be determined based on the eighth information.

Optionally, the type of the first SBP is bistatic with coordination, the fifth message includes ninth information, and the ninth information indicates a sensing transmitter and a sensing receiver corresponding to the sensing measurement result.

With reference to the seventh aspect, in some implementations of the seventh aspect, the communication apparatus further includes: a processing unit, configured to: if the first SBP is successfully established, start a timer after the second message is received, and set start duration of the timer to the first duration, where the processing unit is further configured to terminate the first SBP when the timer expires.

Optionally, the configuration parameter includes tenth information, and the tenth information indicates the first duration.

With reference to the seventh aspect, in some implementations of the seventh aspect, the transceiver unit is further configured to send a sixth message to the SBP responder, where the sixth message is used to terminate the first SBP.

Optionally, the sixth message includes eleventh information, and the eleventh information indicates to terminate all SBP of a bistatic with coordination type, or indicates to terminate all SBP of a monostatic type.

With reference to the seventh aspect, in some implementations of the seventh aspect, if the first SBP fails to be established, the second message further includes a recommended configuration parameter for the sensing measurement setup.

According to an eighth aspect, a communication apparatus is provided. The communication apparatus may be an SBP responder, or may be a component (for example, a chip, a circuit, or a module) configured in the SBP responder. This is not limited in this application.

The communication apparatus includes: a processing unit, configured to generate a fifth message, where the fifth message is used to report a sensing measurement result; and a transceiver unit, configured to send the fifth message to an SBP initiator, where the transceiver unit is specifically configured to: send the fifth message to the SBP initiator after obtaining the sensing measurement result of any sensing responder; or send the fifth message to the SBP initiator after obtaining sensing measurement results of a plurality of sensing responders.

Optionally, the fifth message may be determined based on eighth information, and the eighth information indicates information related to a feedback of the sensing measurement result.

Optionally, the information related to the feedback of the sensing measurement result includes at least one of the following: feeding back after each measurement ends or feeding back after a plurality of measurements end, feeding back a sensing measurement result of one sensing responder each time or feeding back sensing measurement results of a plurality of sensing responders each time, feeding back whether a report includes location configuration information of the sensing responder, feeding back whether the report includes an antenna orientation of the sensing responder, and feeding back whether the report includes a time when the sensing measurement occurs.

Optionally, the type of the first SBP is bistatic with coordination, the fifth message includes ninth information, and the ninth information indicates a sensing transmitter and a sensing receiver corresponding to the sensing measurement result.

According to a ninth aspect, a communication apparatus is provided. The communication apparatus may be an SBP responder, or may be a component (for example, a chip, a circuit, or a module) configured in the SBP responder. This is not limited in this application.

The communication apparatus includes: a processing unit, configured to: when first SBP is successfully established, start a timer after a second message is sent, and set start duration of the timer to first duration, where the processing unit is further configured to terminate the first SBP when the timer expires.

Optionally, the communication apparatus further includes a transceiver unit, configured to receive tenth information from an SBP initiator, where the tenth information indicates the first duration.

According to a tenth aspect, a communication apparatus is provided. The communication apparatus may be an SBP initiator, or may be a component (for example, a chip, a circuit, or a module) configured in the SBP initiator. This is not limited in this application.

The communication apparatus includes: a processing unit, configured to: when first SBP is successfully established, start a timer after a second message is received, and set start duration of the timer to first duration, where the processing unit is further configured to terminate the first SBP when the timer expires.

Optionally, the communication apparatus further includes a transceiver unit, configured to send tenth information to an SBP responder, where the tenth information indicates the first duration.

According to an eleventh aspect, a communication apparatus is provided, and includes a processor and a memory. Optionally, the communication apparatus may further include a transceiver. The memory is configured to store a computer program. The processor is configured to: invoke the computer program stored in the memory and run the computer program, and control the transceiver to receive/send a signal, so that the communication apparatus performs the method according to any one of the first aspect to the fifth aspect or the possible implementations of these aspects.

According to a twelfth aspect, a communication apparatus is provided, and includes a processor and a communication interface. The communication interface is configured to: receive data and/or information, and transmit the received data and/or information to the processor; the processor processes the data and/or information; and the communication interface is further configured to output data and/or information that are/is obtained after processing by the processor, so that the method according to any one of the first aspect to the fifth aspect or the possible implementations of these aspects is performed.

According to a thirteenth aspect, a computer-readable storage medium is provided. The computer-readable storage medium stores computer instructions, and when the computer instructions are run on a computer, the method according to any one of the first aspect to the fifth aspect, or the possible implementations of these aspects is enabled to be performed.

According to a fourteenth aspect, a computer program product is provided. The computer program product includes computer program code, and when the computer program code is run on a computer, the method according to any one of the first aspect to the fifth aspect, or the possible implementations of these aspects is enabled to be performed.

According to a fifteenth aspect, a wireless communication system is provided, and includes the communication apparatuses in the sixth aspect and the seventh aspect, or includes the communication apparatuses in the ninth aspect and the tenth aspect.

### BRIEF DESCRIPTION OF DRAWINGS

FIG. 1 is a diagram of an application scenario to which an embodiment of this application is applicable;
FIG. 2(a) to FIG. 2(h) show five types of high-frequency sensing;
FIG. 3(a) to FIG. 3(h) show five types of sensing by proxy in high-frequency sensing;
FIG. 4 is a schematic flowchart of SBP;
FIG. 5 is a schematic flowchart of a sensing method 200 according to an embodiment of this application;
FIG. 6 is a diagram of a format of a DMG sensing measurement setup element;
FIG. 7 is a schematic flowchart of a sensing method 300 according to an embodiment of this application;
FIG. 8 is a diagram of a format of a DMG sensing report control element;
FIG. 9 is a schematic flowchart of a sensing method 400 according to an embodiment of this application;
FIG. 10 is a diagram of a DMG SBP termination control field according to this application;
FIG. 11 is a schematic flowchart of a sensing method 500 according to an embodiment of this application;
FIG. 12 is a diagram of a communication apparatus according to an embodiment of this application;
FIG. 13 is another diagram of a structure of a communication apparatus according to an embodiment of this application; and
FIG. 14 is still another diagram of a structure of a communication apparatus according to an embodiment of this application.

### DESCRIPTION OF EMBODIMENTS

The following describes technical solutions of this application with reference to accompanying drawings.

The technical solutions provided in embodiments of this application may be applied to a wireless local area network (wireless local area network, WLAN) scenario. For example, IEEE 802.11-related standards such as the 802.11a/b/g standard, the 802.11n standard, the 802.11ac standard, the 802.11ax standard, a next-generation Wi-Fi protocol of IEEE 802.11ax, for example, 802.11be, Wi-Fi 7, an extremely high throughput (extremely high throughput, EHT), 802.11ad, 802.11ay, or 802.11bf, are supported, and a next generation protocol of 802.11be or Wi-Fi 8 is supported. The technical solutions provided in embodiments of this application may be further applied to an ultra-wideband (ultra-wideband, UWB)-based wireless personal area network system, for example, the 802.15 series standards, or may be applied to a sensing (sensing) system, for example, the 802.11bf series standards. The 802.11n standard is referred to as a high throughput (high throughput, HT), the 802.11ac standard is referred to as a very high throughput (very high throughput, VHT), the 802.11ax standard is referred to as high efficiency (high efficiency, HE), and the 802.11be standard is referred to as an extremely high throughput (extremely high throughput, EHT). 802.11bf includes two major categories of standards: a low frequency (sub-7 GHz) and a high frequency (60 GHz). The sub-7 GHz is implemented mainly based on standards such as 802.11ac, 802.11ax, 802.11be, and a next-generation standard of 802.11be. 60 GHz is implemented mainly based on standards such as 802.11ad, 802.11ay, and a next-generation standard of 802.11ay. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

Although embodiments of this application are mainly described by using an example in which a WLAN network is deployed, especially a network to which the IEEE 802.11 system standards are applied, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of a used coverage area and a used wireless access protocol, the various aspects provided in embodiments of this application are applicable to any appropriate wireless network.

The technical solutions in embodiments of this application may be further applied to various communication systems, for example, a WLAN communication system, a wireless fidelity (wireless fidelity, Wi-Fi) system, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a fifth generation (5th generation, 5G) system or new radio (new radio, NR), a future sixth generation (6th generation, 6G) system, an internet of things (internet of things, IoT) network, or a vehicle-to-everything (vehicle to x, V2X).

The foregoing communication system applicable to this application is only an example for description, and the communication system applicable to this application is not limited thereto. This is uniformly described herein, and details are not described below again.

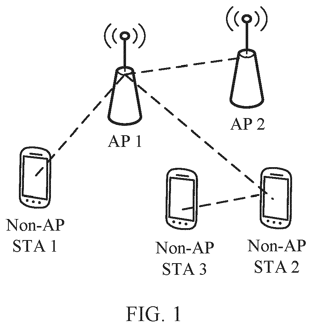

FIG. 1 is a diagram of an application scenario to which an embodiment of this application is applicable. As shown in FIG. 1, a resource configuration method provided in this application is applicable to data communication between stations (stations, STAs). The station may be an access point (access point, AP) station, or may be a non-access point station (non-access point station, non-AP STA). The access point station and the non-access point station are briefly referred to as an AP and a non-AP station respectively. Specifically, the solution in this application is applicable to data communication between an AP and one or more non-AP stations (for example, data communication between an AP 1 and each of a non-AP STA 1 and a non-AP STA 2), and is also applicable to data communication between APs (for example, data communication between the AP 1 and an AP 2) and data communication between non-AP STAs (for example, data communication between the non-AP STA 2 and a non-AP STA 3).

The access point may be an access point used by a terminal (like a mobile phone) to access a wired (or wireless) network, and is mainly deployed at home, in a building, and in a park. A typical coverage radius is tens of meters to 100-odd meters. Certainly, the access point may alternatively be deployed outdoors. The access point is equivalent to a bridge that connects a wired network and a wireless network. A main function of the access point is to connect various wireless network clients together and then connect the wireless network to the Ethernet.

Specifically, the access point may be a terminal or a network device with a Wi-Fi chip. The network device may be a server, a router, a switch, a bridge, a computer, a mobile phone, a relay station, a vehicle-mounted device, a wearable device, a network device in a 5G network, a network device in a future 6G network, a network device in a public land mobile network (public land mobile network, PLMN), or the like. This is not limited in embodiments of this application. The access point may be a device that supports a Wi-Fi standard. For example, the access point may alternatively support one or more standards of the institute of electrical and electronics engineers (Institute of Electrical and Electronics Engineers, IEEE) 802.11 family, for example, 802.11a, 802.11b, 802.11g, 802.11n, 802.11ac, 802.11ax, 802.11be, 802.11ad, and 802.11ay.

The non-AP station may be a wireless communication chip, a wireless sensor, a wireless communication terminal, or the like, and may also be referred to as a user, user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The non-AP station may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, an internet of things device, a wearable device, a terminal device in a 5G network, a terminal device in a future 6G network, a terminal device in a PLMN, or the like. This is not limited in embodiments of this application. The non-AP station may be a device that supports a WLAN standard. For example, the non-AP station may support one or more standards of the IEEE 802.11 family, for example, 802.11a, 802.11b, 802.11g, 802.11n, 802.11ac, 802.11ax, 802.11be, 802.11ad, and 802.11ay.

For example, the non-AP station may be a mobile phone, a tablet computer, a set-top box, a smart television, a smart wearable device, an in-vehicle communication device, a computer, an internet of things (internet of things, IoT) node, a sensor, a smart camera, a smart remote control, or a smart water/electricity meter in a smart home, and a sensor in a smart city.

The AP or the non-AP station may include a transmitter, a receiver, a memory, a processor, and the like. The transmitter and the receiver are respectively configured to send a package structure and receive a packet structure. The memory is configured to store signaling information, store a preset value agreed in advance, and the like. The processor is configured to parse the signaling information, process related data, and the like.

Radar sensing is a wireless sensing technology. A radar includes a transmit antenna and a receive antenna. The transmit antenna sends an electromagnetic wave. The electromagnetic wave is reflected when reaching a target, and a reflected wave may be received by the receive antenna. Based on changes of a transmitted wave and a received wave, the radar system analyzes feature information of the target, such as a location, a shape, a motion characteristic, and a motion track, through signal processing. The radar sensing has many unique advantages. For example, a radar is not affected by light, and has a capability of penetrating an obstacle, so that personal privacy can be better protected, and a radar is capable of sensing a far range, and does not cause harm to people or animals. An advantage of implementing sensing by using the radar technology is mainly reflected in motion detection. A motion status of the target, for example, a motion direction and a motion speed, is observed and interpreted based on a doppler effect of an echo of the target.

An introduction of the sensing technology in the WLAN has a good commercial prospect. The wireless sensing (Wi-Fi sensing) technology may be applied in different scenarios. For example, in sports, this technology may be used to detect motion statuses and motion tracks of a person and a ball. For another example, in a home environment, this technology may be used to perform human body fall detection, to prevent an elderly person from falling. The wireless sensing technology may make full use of existing WLAN resources without a need of high costs. In a future densely deployed WLAN, there are a plurality of non-AP STAs in a coverage area of one AP, and the AP may perform proper resource scheduling on each non-AP STA to improve throughput and robustness of a system, and the like.

The 802.11bf protocol supports sensing on the sub-7 GHz frequency band and a high frequency band (for example, 60 GHz). On the sub-7 GHz frequency band, the sensing is used to: identify actions, track motion tracks, and detect falling by detecting wireless channels and estimate channel state information (channel state information, CSI). On the 60 GHz frequency band, the sensing is used to obtain environment information and state information of the target by performing directional beam scanning on an environment to obtain a range doppler map (range doppler map, RD Map). A phase of the transmit antenna is adjusted, so that energy of radio signals is aggregated in a specific direction, to form a directed (or directional) beam (beam). A directional beam has a narrower beam width and more concentrated energy. Therefore, the directional beam has a higher antenna gain and interference to another received signal is reduced.

The following briefly describes some concepts of a sensing procedure.

### 1. Role in sensing

A WLAN sensing technology may include the following roles. It should be understood that in some scenarios, the following different roles may be performed by a same device.
(1) Sensing initiator: a station that initiates a sensing procedure.
   sensing initiator: a STA that initiates a WLAN sensing procedure.
(2) Sensing responder: a station that participates in a sensing procedure initiated by a sensing initiator.
   sensing responder: a STA that participates in a WLAN sensing procedure initiated by a sensing initiator.
(3) Sensing transmitter: a station that transmits a physical layer protocol data unit (physical layer protocol data unit, PPDU) used for a sensing measurement in a sensing procedure.
   sensing transmitter: a STA that transmits PPDUs used for sensing measurements in a sensing procedure.
(4) Sensing receiver: a station that receives a PPDU sent by a sensing transmitter and performs a sensing measurement in a sensing procedure.
   sensing receiver: a STA that receives PPDUs sent by a sensing transmitter and performs sensing measurements in a sensing procedure.

In SBP, roles in sensing further include:
(5) Sensing by proxy initiator (SBP initiator): a station that initiates a sensing by proxy procedure.
(6) Sensing by proxy responder (SBP responder): a station that participates in a sensing by proxy procedure initiated by a sensing by proxy initiator, and is used as a sensing initiator in the sensing procedure.

### 2. Sensing procedure

The sensing procedure may be used to describe how to perform sensing, and the sensing procedure may include the following five steps.
(1) Sensing session setup (sensing session setup): indicates to establish a sensing session between stations. Some sensing-related parameters can be exchanged here (details are to be determined). Note: The sensing session is a protocol, between two stations, that is reached by a sensing initiator and a sensing responder. One sensing initiator may maintain sensing sessions with a plurality of sensing responders, but the sensing sessions still need to be established one by one, for example, in an orthogonal frequency division multiple access (orthogonal frequency division multiple access, OFDMA) manner or a multi-user multiple-input multiple-output (multi-user multiple-input multiple-output, MU-MIMO) manner. The sensing session may also be referred to as a sensing session.
(2) Sensing measurement setup (sensing measurement setup): is used to exchange and unify some parameters, attributes, and the like that need to be used in the sensing procedure between the sensing initiator and the sensing responder, for example, parameters such as a role of the sensing initiator, a role of the sensing responder, and a measurement feedback type. For example, the role of the responder may include a sensing transmitter and a sensing receiver. The sensing measurement setup may be referred to as a measurement setup for short. The sensing measurement setup may be identified by using a sensing measurement setup identifier (sensing measurement setup ID).
(3) Sensing measurement instance (sensing measurement instance): A sensing measurement occurs in the sensing measurement instance. A plurality of sensing responders are allowed to participate in one sensing measurement instance. A sensing measurement instance setup may also be referred to as the sensing measurement instance, and the sensing measurement instance may be referred to as a measurement instance or an instance for short. Each sensing measurement instance may be identified by using a sensing measurement instance identifier (sensing measurement instance ID).
(4) Sensing measurement setup termination (sensing measurement setup termination): The sensing measurement setup termination is used to terminate a measurement setup procedure corresponding to a sensing responder. After termination, the sensing responder is no longer bound to the corresponding measurement setup, but may still be in a sensing session. The sensing measurement setup termination may be referred to as measurement setup termination for short.
(5) Sensing session termination (sensing session termination): indicates termination of the sensing session, and a station no longer participates in a procedure like the sensing measurement.

### 3. Type of high-frequency sensing

In the IEEE 802.11bf protocol, one sensing session is initiated by one sensing initiator (sensing initiator) and participated by one or more sensing responders (sensing responders). In the protocol, five types of high-frequency sensing are specified: monostatic (monostatic) sensing, bistatic (bistatic) sensing, multistatic (multistatic) sensing, monostatic with coordination (monostatic with coordination) sensing, and bistatic with coordination (bistatic with coordination) sensing.

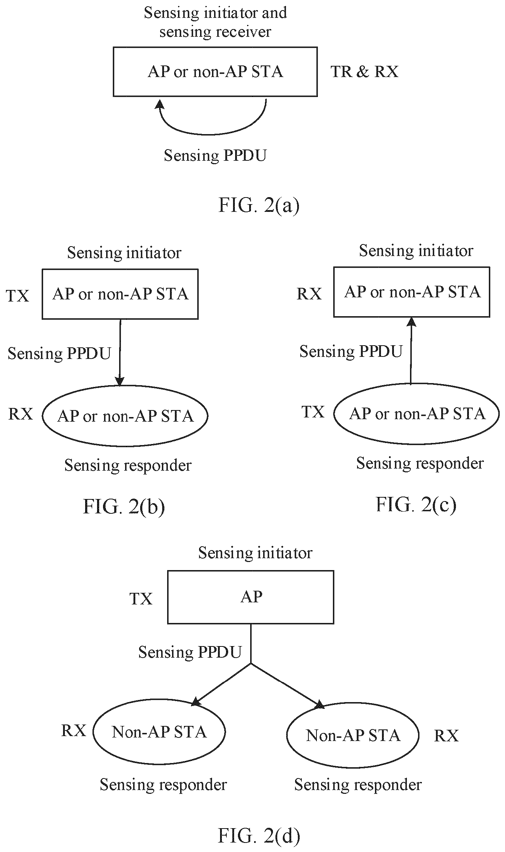

FIG. 2(a) to FIG. 2(h) show the five types of high-frequency sensing. The high-frequency sensing means DMG sensing or EDMG sensing defined in the IEEE 802.11bf protocol. For the high-frequency sensing, when a transmitter and a receiver are a same device, it may be referred to as a self-sending and self-receiving mode; or when the transmitter and the receiver are different devices, it may be referred to as a bistatic mode. In FIG. 2(a) to FIG. 2(h), TX indicates a sensing transmitter (transmitter), and RX indicates a sensing receiver (receiver).

FIG. 2(a) shows the monostatic sensing. As shown in FIG. 2(a), in the monostatic sensing, the sensing initiator is both the sensing transmitter and the sensing receiver, and receives a sensing PPDU sent by the sensing initiator to perform a sensing measurement, that is, performs self-sending and self-receiving.

FIG. 2(b) and FIG. 2(c) show the bistatic sensing. As shown in FIG. 2(b) and FIG. 2(c), in the bistatic sensing, the sensing initiator and the sensing responder separately play one role of the sensing transmitter and the sensing receiver, that is, one sending and one receiving are performed. The sensing transmitter sends a sensing PPDU to the sensing receiver, and the sensing receiver performs a sensing measurement. In FIG. 2(b), the sensing initiator is used as the sensing transmitter, and the sensing responder is used as the sensing receiver. In FIG. 2(c), the sensing initiator is used as the sensing receiver, and the sensing responder is used as the sensing transmitter.

FIG. 2(d) shows the multistatic sensing. As shown in FIG. 2(d), in the multistatic sensing, the sensing initiator is used as the sensing transmitter, and sends one sensing PPDU to the plurality of sensing responders, that is, one sending and multiple receiving are performed, and these sensing responders are used as sensing receivers to perform sensing measurements.

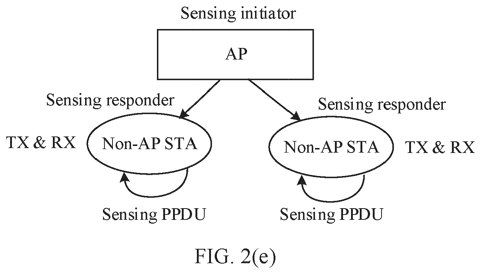

FIG. 2(e) shows the monostatic with coordination sensing. As shown in FIG. 2(e), in the monostatic with coordination sensing, the sensing initiator enables the one or more sensing responders to perform a sensing measurement of self-sending and self-receiving.

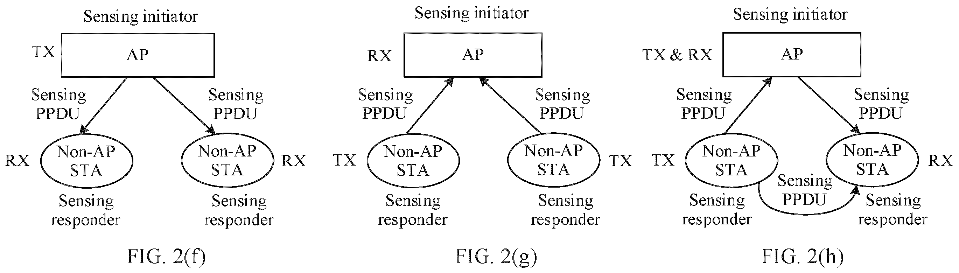

FIG. 2(f), FIG. 2(g), and FIG. 2(h) show the bistatic with coordination sensing. As shown in FIG. 2(f), FIG. 2(g), and FIG. 2(h), in the bistatic with coordination sensing, the sensing initiator performs a sensing measurement of one-sending and one-receiving with each of the plurality of sensing responders. In FIG. 2(f), the sensing initiator is used as the sensing transmitter, and the plurality of sensing responders are used as the sensing receivers respectively. In FIG. 2(g), the sensing initiator is used as the sensing receiver, and the plurality of sensing responders are used as sensing transmitters respectively. In FIG. 2(h), one sensing responder is used as the sensing transmitter, and another sensing responder is used as the sensing receiver, that is, the sensing responder used as the TX sends a sensing PPDU to the another sensing responder used as the RX. The latter performs a sensing measurement, and then feeds back a measurement result to the sensing initiator. In addition, in FIG. 2(h), the sensing initiator is both the sensing transmitter and the sensing receiver. One sensing responder may send the sensing PPDU to the sensing initiator, and the sensing initiator may also send the sensing PPDU to the another sensing responder.

It can be seen from FIG. 2(a) to FIG. 2(h) that, in the monostatic sensing and the bistatic sensing, the sensing initiator may be an AP or a non-AP STA, and the sensing responder may also be an AP or a non-AP STA. In the multistatic sensing, the monostatic with coordination sensing, and the bistatic with coordination sensing, the sensing initiator is usually an AP, and the sensing responder is usually a non-AP STA.

### 4. Sensing by proxy (sensing by proxy, SBP)

The sensing by proxy means that a first station (for example, a non-AP STA) may request a second station (for example, an AP) to perform WLAN sensing and request the second station to feed back a sensing result to the first station. The station that initiates an SBP procedure (the first station) is referred to as an SBP initiator (SBP initiator), and the requested station (the second station) participates in the SBP as a proxy (proxy). The requested station is referred to as an SBP responder (SBP responder), and the requested station is also a sensing initiator (sensing initiator) in the SBP sensing procedure. One or more parties participating in the sensing procedure initiated by the SBP responder are sensing responders.

### 5. SBP in high-frequency sensing

Corresponding to the five types of high-frequency sensing shown in FIG. 2(a) to FIG. 2(h), the SBP in high-frequency sensing may also be classified into five types: SBP with monostatic (SBP with monostatic), SBP with bistatic (SBP with bistatic), SBP with multistatic (SBP with multistatic), SBP with monostatic with coordination (SBP with monostatic with coordination), and SBP with bistatic with coordination (SBP with bistatic with coordination). Different from that shown in FIG. 2(a) to FIG. 2(h), in the SBP, an SBP initiator may request an SBP responder to perform a sensing procedure, the SBP responder is used as a sensing initiator and performs sensing with a sensing responder, and the sensing initiator may finally feed back a sensing result to the SBP initiator.

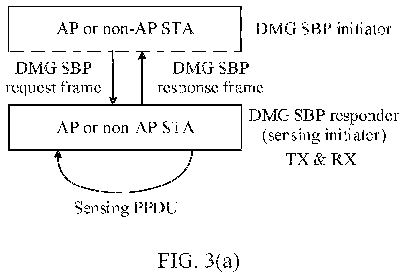

FIG. 3(a) to FIG. 3(h) show the five types of sensing by proxy in high-frequency sensing. As shown in FIG. 3(a) to FIG. 3(h), in any type of SBP, the SBP initiator and the SBP responder exchange an SBP request frame and an SBP response frame, so that the SBP responder may be used as the sensing initiator. Further, the sensing initiator may feed back a sensing result to the SBP initiator by using an SBP report frame. Similar to FIG. 2(a) to FIG. 2(h), in FIG. 3(a) to FIG. 3(h), TX indicates a sensing transmitter (transmitter), and RX indicates a sensing receiver (receiver). In addition, in high-frequency SBP shown in FIG. 3(a) to FIG. 3(h), the SBP initiator and the SBP responder are devices used for WLAN high-frequency sensing, and may be respectively referred to as a DMG SBP initiator and a DMG SBP responder. Similarly, the SBP request frame, the SBP response frame, the SBP report frame, and an SBP Termination frame are frames used in the WLAN high-frequency sensing, and may also be respectively referred to as a DMG SBP Request frame, a DMG SBP Response frame, a DMG SBP Report frame, and a DMG SBP Termination frame.

FIG. 3(a) shows the SBP with monostatic. Similar to FIG. 2(a), in FIG. 3(a), the sensing initiator is both the sensing transmitter and the sensing receiver, and receives a sensing PPDU sent by the sensing initiator to perform a sensing measurement, that is, self-sending and self-receiving are performed. Different from FIG. 2(a), in FIG. 3(a), the sensing initiator may further feed back a sensing result to the DMG SBP initiator.

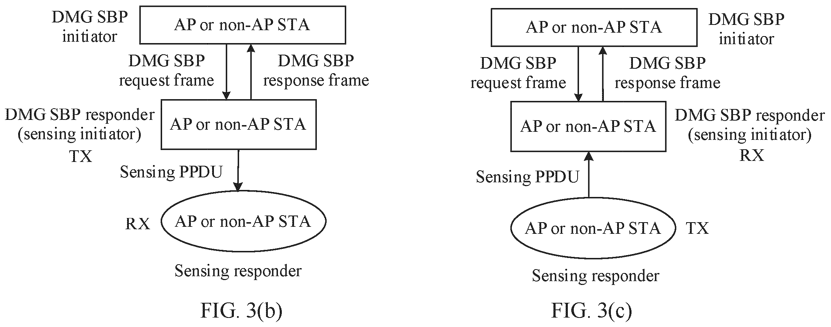

FIG. 3(b) and FIG. 3(c) show the SBP with bistatic. Similar to FIG. 2(b), in FIG. 3(b), the sensing initiator is used as the sensing transmitter, the sensing responder is used as the sensing receiver, and the sensing receiver may feed back a sensing result to the sensing initiator. Similar to FIG. 2(c), in FIG. 3(c), the sensing initiator is used as the sensing receiver, and the sensing responder is used as the sensing transmitter. Different from FIG. 2(b) and FIG. 2(c), in FIG. 3(b) and FIG. 3(c), the sensing initiator may further feed back a sensing result to the DMG SBP initiator.

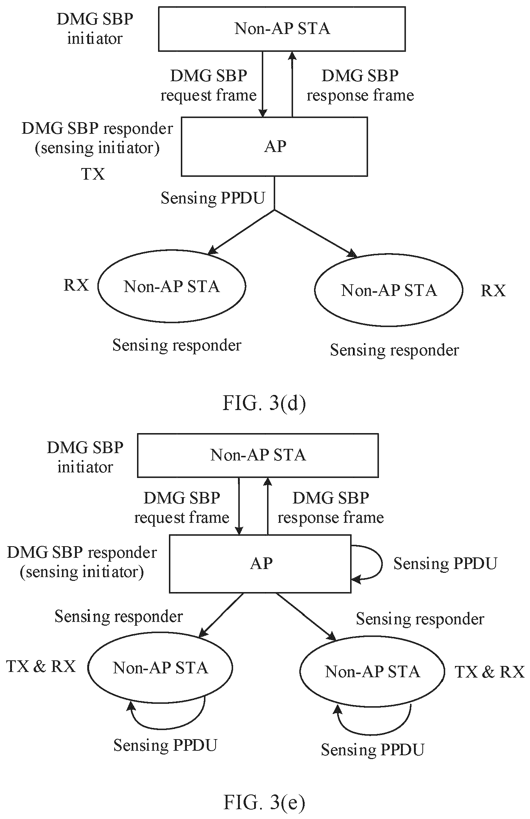

FIG. 3(d) shows the SBP with multistatic. Similar to FIG. 2(d), in FIG. 3(d), the sensing initiator is used as the sensing transmitter, and sends one sensing PPDU to a plurality of sensing responders, that is, one sending and multiple receiving are performed, these sensing responders are used as sensing receivers to perform sensing measurements, and these sensing receivers may feed back sensing results to the sensing initiator. Different from FIG. 2(d), in FIG. 3(d), the sensing initiator may further feed back the sensing result to the DMG SBP initiator.

FIG. 3(e) shows the SBP with monostatic with coordination. Similar to FIG. 2(e), in FIG. 3(e), the sensing initiator enables one or more sensing responders to perform a sensing measurement of self-sending and self-receiving, and the sensing receiver may feed back a sensing result to the sensing initiator. Different from that in FIG. 2(e), in this type of SBP, the DMG SBP initiator may further request the sensing initiator to perform self-sending and self-receiving sensing. In addition, in FIG. 3(e), the sensing initiator may further feed back the sensing result to the DMG SBP initiator.

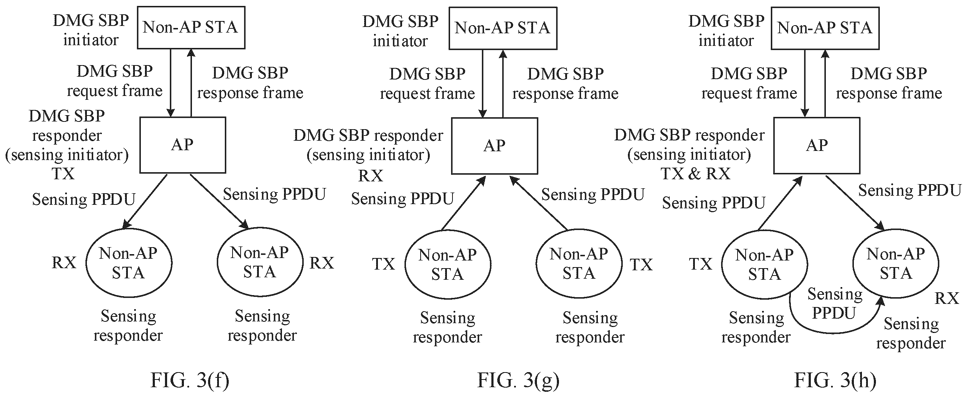

FIG. 3(f), FIG. 3(g), and FIG. 3(h) show the SBP with bistatic with coordination. Similar to FIG. 2(f), in FIG. 3(f), the sensing initiator is used as the sensing transmitter, and a plurality of sensing responders are used as sensing receivers respectively. Similar to FIG. 2(g), in FIG. 3(g), the sensing initiator is used as the sensing receiver, a plurality of sensing responders are used as sensing transmitters respectively, and the sensing receiver may feed back sensing results to the sensing initiator. Similar to FIG. 2(h), in FIG. 3(h), one sensing responder is used as the sensing transmitter, and another sensing responder is used as the sensing receiver, that is, the sensing responder used as the TX sends a sensing PPDU to the another sensing responder used as the RX. The latter performs a sensing measurement, and then feeds back a measurement result to the sensing initiator. In addition, in FIG. 3(h), the sensing initiator is both the sensing transmitter and the sensing receiver. One sensing responder may send the sensing PPDU to the sensing initiator, and the sensing initiator may also send the sensing PPDU to the another sensing responder. Different from FIG. 2(f), FIG. 2(g), and FIG. 2(h), in FIG. 3(f), FIG. 3(g), and FIG. 3(h), the sensing initiator may further feed back the sensing result to the DMG SBP initiator.

It can be seen from FIG. 3(a) to FIG. 3(h) that, in the SBP with monostatic and the SBP with bistatic, the SBP initiator may be an AP or a non-AP STA, the SBP responder (that is, the sensing initiator) may be an AP or a non-AP STA, and the sensing responder may also be an AP or a non-AP STA. In the SBP with multistatic, the SBP with monostatic with coordination, and the SBP with bistatic with coordination, the SBP initiator is usually a non-AP STA, the SBP responder (that is, the sensing initiator) is usually an AP, and the sensing responder is usually a non-AP STA. It should be understood that FIG. 3(a) to FIG. 3(h) show merely several examples of application scenarios of this application, and does not constitute a limitation on this application. For example, in the SBP with multistatic, the SBP with monostatic with coordination, and the SBP with bistatic with coordination, the SBP initiator may alternatively be an AP, the SBP responder (that is, the sensing initiator) may alternatively be a non-AP STA, and the sensing responder may alternatively be an AP.

### 6. SBP procedure

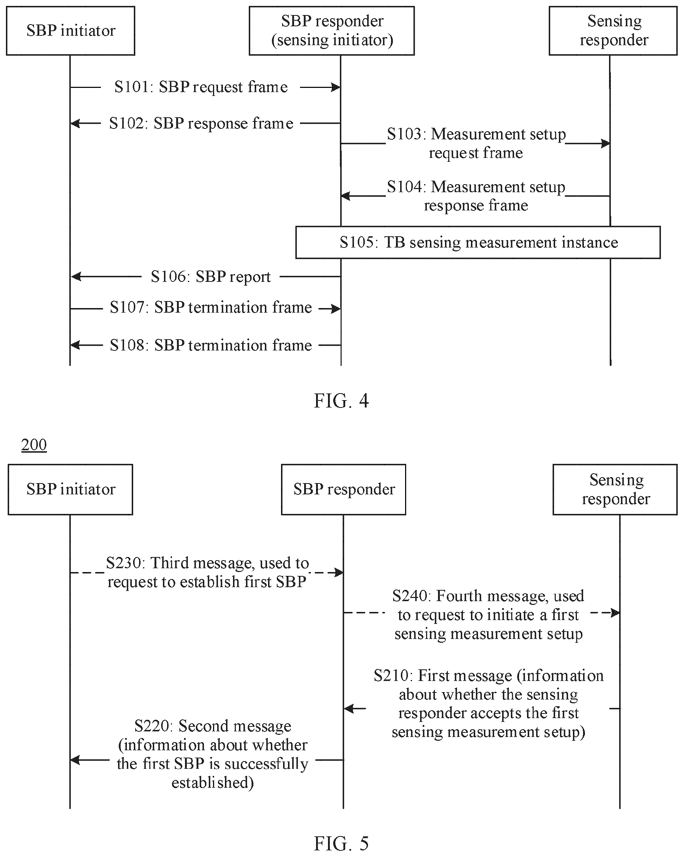

FIG. 4 is a schematic flowchart of SBP. FIG. 4 shows an SBP procedure defined for a sub-7 GHz frequency band in the IEEE 802.11bf protocol. As shown in FIG. 4, the procedure may include the following steps.

S101: An SBP initiator sends an SBP request (SBP request) frame to an SBP responder, where the frame includes a configuration parameter of the SBP procedure.

S102: After the SBP request frame is received, the SBP responder may reply with an SBP response (SBP response) frame.

If the configuration parameter in the SBP request frame complies with setting of the SBP responder, the SBP response frame indicates that an SBP request is accepted and SBP is successfully established, otherwise, an SBP request is rejected and the SBP fails to be established.

S101 and S102 may be referred to as an SBP setup (SBP setup) phase. After the SBP is successfully established, the SBP responder, as a sensing initiator, initiates a sensing procedure to one or more sensing responders. The sensing procedure includes a sensing measurement setup (sensing measurement setup) phase and a sensing measurement instance (sensing measurement instance) phase. The sensing measurement setup phase includes S103 and S104.

S103: The SBP responder sends a sensing measurement setup request (sensing measurement setup request) frame to the sensing responder.

The sensing measurement setup request frame includes a sensing measurement setup identifier (sensing measurement setup ID) and one or more sensing measurement setup parameters elements (sensing measurement setup parameters elements).

S104: The sensing responder sends a sensing measurement setup response (sensing measurement setup response) frame to the SBP responder.

The sensing measurement setup response frame includes a status code (status code) in response to a sensing measurement setup request and/or the one or more sensing measurement setup parameters elements (sensing measurement setup parameters elements).

S105: The sensing responder and the SBP responder perform a sensing measurement.

The sensing measurement performed on the sub-7 GHz frequency band is a trigger-based (trigger-based, TB) sensing measurement. The sensing measurement includes that one of the sensing responder and the SBP responder sends a sensing PPDU and the other obtains a sensing measurement result. If the sensing responder obtains the sensing measurement result as a sensing receiver, the sensing responder may send the sensing measurement result to the SBP responder.

S106: After obtaining the sensing measurement result, the SBP responder feeds back the sensing measurement result to the SBP initiator by using an SBP report (SBP report) frame.

S106 is an SBP reporting (SBP reporting) phase. S107 and S108 are an SBP termination (SBP termination) phase. The SBP may be terminated by either the SBP initiator or the SBP responder by sending an SBP termination (SBP termination) frame.

S107: The SBP initiator sends the SBP Termination frame to terminate the SBP procedure.

S108: The SBP responder sends the SBP Termination frame to terminate the SBP procedure.

The SBP procedure shown in FIG. 4 is mainly designed for the sub-7 GHz frequency band. However, in high-frequency sensing, directional signals are sent and detected, and are more sensitive to a location change and blocking. It is likely that a connection to the sensing initiator is interrupted due to location movement. If the procedure for the sub-7 GHz frequency band is still used, additional signaling overheads are likely caused because known information available to the SBP responder is inconsistent with current information existing when the SBP is established, and consequently, a success rate of an SBP setup is reduced, and efficiency is decreased. For example, in FIG. 4, after the SBP request frame is received, the SBP responder replies with whether to accept the SBP request based on a capability and information of the sensing responder. However, the information may be outdated or inaccurate. For example, the SBP responder learns that there are five devices have a sensing capability in devices associated with the SBP responder. When the SBP request frame is used to request four sensing responders to participate in sensing, the SBP responder may accept the request. However, after accepting the request, the SBP responder can establish sensing measurements with only two sensing devices in a subsequent sensing measurement setup phase, and the remaining three sensing devices may not be able to perform sensing measurements due to reasons such as location movement or physical blocking. Therefore, the SBP responder needs to send the SBP Termination frame to terminate the SBP procedure, and consequently, the SBP fails to be established.

In view of this, this application provides a sensing method and a communication apparatus. An SBP responder may determine, based on a result of a sensing measurement setup of a sensing responder, whether to accept an SBP request, and accept the SBP request when the result of the sensing measurement setup is successful, to increase a success rate of an SBP setup, thereby improving sensing efficiency.

In this application, a message may be understood as a frame, and information or a parameter in the message may be understood as a field (field) in the frame, that is, the information or the parameter in the message is indicated by the field in the frame. In addition, the field in this application is a field in a broad sense. In some cases, the field may also be referred to as a domain, an element, a subelement, a subfield, or the like.

FIG. 5 is a schematic flowchart of a sensing method 200 according to an embodiment of this application. For FIG. 5, refer to descriptions in FIG. 1 to FIG. 4. The method 200 may be applied to a DMG SBP setup phase.

S210: A sensing responder sends a first message to an SBP responder, and correspondingly, the SBP responder receives the first message from the sensing responder.

The first message includes information about whether the sensing responder accepts a first sensing measurement setup. That the first message includes the information about whether the sensing responder accepts the first sensing measurement setup may also be understood as that the first message includes first indication information, where the first indication information indicates whether the sensing responder accepts the first sensing measurement setup.

For example, the first indication information may be a status code.

The information about whether the sensing responder accepts the first sensing measurement setup may also be referred to as information about whether a request for the first sensing measurement setup is successful, or referred to as a result of the first sensing measurement setup.

For example, the first message may be a measurement setup response (measurement setup response) frame, and the information about whether the sensing responder accepts the first sensing measurement setup may be a status code (status code) field in the measurement setup response frame.

Optionally, the first message may further include an identifier of the first sensing measurement setup. For example, the identifier of the first sensing measurement setup is a sensing measurement setup ID (sensing measurement setup ID).

S220: The SBP responder sends a second message to an SBP initiator, and correspondingly, the SBP initiator receives the second message from the SBP responder.

The second message includes information about whether first SBP is successfully established. That the second message includes the information about whether the first SBP is successfully established may also be understood as that the second message includes second indication information, where the second indication information indicates whether the first SBP is successfully established.

For example, the second indication information may be a status code.

The information about whether the first SBP is successfully established may also be referred to as information about whether the SBP responder accepts a request of establishing the first SBP, or referred to as a result of establishing the first SBP.

For example, the second message may be an SBP response (SBP response) frame, and the information about whether the first SBP is successfully established may be a status code (status code) field in the SBP response frame.

Optionally, the second message may further include an identifier of the first SBP. For example, the identifier of the first SBP may be a value of a dialog token (dialog token), where the dialog token may be used to mark an SBP request, and the value of the dialog token may be the same as a value of a dialog token that is set by the SBP initiator in an SBP request frame.

The second message is determined based on the first message. In other words, the second message is determined via the first message. In other words, the SBP responder determines, based on whether the sensing responder accepts the first sensing measurement setup, whether the first SBP is successfully established.

For example, if the first message includes information about that the sensing responder accepts the first sensing measurement setup, the second message includes information about that the first SBP is successfully established. For another example, if the first message includes information about that the sensing responder rejects the first sensing measurement setup, the second message includes information about that the first SBP fails to be established.

Optionally, a step in S210 may be performed by a plurality of sensing responders. In other words, the plurality of sensing responders may send the first message to a same SBP responder. In this case, that the second message is determined based on the first message may be understood as that the SBP responder determines, based on whether the plurality of sensing responders accept the first sensing measurement setup, whether the first SBP is successfully established. For example, when X sensing responders in the plurality of sensing responders accept the first sensing measurement setup, the SBP responder determines that the first SBP is successfully established, where X may be a preset value.

For example, the preset value may be indicated by the SBP initiator to the SBP responder before S210, or may be predefined in a protocol.

Optionally, in this application, the sensing responder may be an AP, or may be a non-AP STA. Similarly, the SBP responder may be an AP, or may be a non-AP STA. The SBP initiator may be an AP, or may be a non-AP STA. Whether the SBP initiator, the SBP responder, and the sensing responder are specifically APs or non-AP STAs depends on a sensing type, and reference may be made to FIG. 3(a) to FIG. 3(h).

Based on the foregoing solution, the SBP responder may determine, based on a result of a sensing measurement setup, whether SBP is established. When the result of the sensing measurement setup is successful, the SBP responder sends information about that the SBP is successfully established. When the result of the sensing measurement setup is unsuccessful, the SBP responder sends information about that the SBP fails to be established. In this way, this can increase a success rate of the SBP setup, and further improve sensing efficiency.

Optionally, before S210, the method 200 further includes: S230: The SBP initiator sends a third message to the SBP responder, and correspondingly, the SBP responder receives the third message from the SBP initiator.

The third message is used to request to establish the first SBP, that is, the third message is used to initiate a setup of the first SBP.

The third message includes a configuration parameter of the first sensing measurement setup. In other words, the third message includes a parameter used to configure the sensing measurement setup in the SBP. In other words, the third message includes parameters of sensing of different sensing types, and the sensing type may be any one shown in FIG. 3(a) to FIG. 3(h).

In addition, the configuration parameter of the sensing measurement setup may include one or more of the following parameters: a parameter required in a sensing measurement setup procedure, a parameter required in a sensing measurement procedure, a parameter fed back after the sensing measurement is completed, or the like.

For example, the third message may be an SBP request (SBP request) frame, and the second message may be considered as a response to the third message.

Based on the foregoing solution, the SBP initiator may request, in the third message, the configuration parameter of the sensing measurement setup. Further, the SBP responder may determine, based on the configuration parameter, a parameter for performing the sensing measurement setup with the sensing responder. In this way, the SBP initiator can control and manage an SBP procedure more flexibly and comprehensively.

Optionally, the third message may further include the identifier of the first SBP. For example, the identifier of the first SBP may be a value of a dialog token (dialog token), and the dialog token may be used to mark an SBP request initiated this time.

Optionally, the third message may further include the identifier of the first sensing measurement setup. In other words, the identifier of the first sensing measurement setup may be determined by the SBP initiator. In this case, the SBP initiator may include the identifier of the first sensing measurement setup in the third message, and the SBP responder includes the identifier of the first sensing measurement setup in the second message.

Optionally, the identifier of the first sensing measurement setup is determined by the SBP responder. In this case, the third message of the SBP initiator may not carry the identifier of the sensing measurement setup, and after determining the identifier of the first sensing measurement setup, the SBP responder includes the identifier of the first sensing measurement setup in the second message.

Based on the foregoing solution, the identifier of the sensing measurement setup may be determined by the SBP initiator, or may be determined by the SBP responder. In this way, flexibility of the SBP procedure can be improved.

Optionally, after S230 and before S210, the method 200 further includes: S240: The SBP responder sends a fourth message to the sensing responder, and correspondingly, the sensing responder receives the fourth message from the SBP responder.

The fourth message is used to request to initiate the first sensing measurement setup.

The fourth message is determined based on the third message, in other words, the fourth message includes partial information in the third message. For example, the third message includes that a sensing responder #1 is a sensing receiver, and in this case, the SBP responder may configure the sensing responder #1 as the sensing receiver based on the fourth message. For another example, the third message includes that a number of sensing responders is five, and in this case, the SBP responder may initiate sensing measurement setups with the five sensing responders based on the fourth message.

For example, the fourth message may be a measurement setup request (measurement setup request) frame, and the first message may be considered as a response to the fourth message.

Based on the foregoing solution, the SBP responder may determine, based on the configuration parameter sent by the SBP initiator, the parameter for performing the sensing measurement setup with the sensing responder. In this way, the SBP initiator can control and manage the SBP procedure more flexibly and comprehensively.

Optionally, if the first SBP fails to be established, the second message may further include a recommended parameter for the first sensing measurement setup. The recommended parameter may be understood as a parameter acceptable to the SBP responder for the first SBP. For example, the SBP request frame indicates that a number of sensing responders is 5, the SBP responder can perform sensing measurement setups with only three sensing responders in a subsequent sensing measurement setup phase, and the SBP responder may indicate, in the second message, that the SBP fails to be established, or may include information to indicate that a recommended number of sensing responders is 3.

It should be understood that, in the method 200 in this application, the SBP initiator and the SBP responder may be devices used for WLAN high-frequency sensing, and may be respectively referred to as a DMG SBP initiator and a DMG SBP responder. Similarly, the SBP request frame and the SBP response frame are frames used for the WLAN high-frequency sensing, and may also be referred to as a DMG SBP Request frame and a DMG SBP Response frame. Optionally, the method 200 in this application may also be applied to a sub-7 GHz frequency band. This is not limited. For ease of description, the following uses the DMG SBP initiator, the DMG SBP responder, the DMG SBP Request frame, and the DMG SBP Response frame as examples for description.

The following describes in detail a configuration parameter of the DMG SBP Request frame provided in this application. The configuration parameter may include at least one of an SBP-specific parameter and a DMG sensing-common parameter. The SBP-specific parameter may be placed in a DMG SBP parameters element (DMG SBP Parameters element), and the DMG sensing-common parameter may be indicated by reusing an existing DMG sensing measurement setup element (DMG Sensing Measurement Setup element) in DMG sensing. The SBP-specific parameter includes at least one parameter in the DMG SBP parameters element, and the DMG sensing-common parameter includes at least one parameter in the DMG sensing measurement setup element.

Specifically, the DMG SBP Request frame is an action (action) frame, and is sent by the DMG SBP initiator to the DMG SBP responder. An action field (action field) of the DMG SBP Request frame may include at least one field shown in Table 1.

**Table 1**

| Field name | Field meaning |
|---|---|
| Category (Category) | Refer to a definition in the 802.11 series standards. The category field is a common field in the 802.11 series standards. For a meaning of the category field, refer to any standard in the 802.11 series standards, for example, the 802.11ax standard or the 802.11bf standard. |
| Unprotected DMG action (unprotected DMG action) | Refer to a definition in the 802.11 series standards. The unprotected DMG action field is a common field in the 802.11 series standards. |
| | For a meaning of the unprotected DMG action field, refer to any standard in the 802.11 series standards, for example, the 802.11ax standard or the 802.11bf standard. |
| Dialog token (dialog token) | The dialog token can be used to mark a DMG SBP Request initiated by the DMG SBP initiator this time. |
| DMG sensing measurement setup identifier (DMG sensing measurement setup ID) | Is used to mark values of a group of DMG sensing measurement configuration parameters, and may be set by the DMG SBP initiator or the DMG SBP responder. |
| | For example, if the DMG SBP initiator is an AP, the DMG measurement setup identifier may be set by the DMG SBP initiator, and this field may exist in the DMG SBP Request frame; or if the DMG SBP responder is an AP, the DMG measurement setup identifier may be set by the DMG SBP responder, and this field may exist in the DMG SBP Response frame. |
| DMG SBP parameters element (DMG SBP parameters element) | Is used to carry configuration parameters requested by the DMG SBP initiator. These parameters are specific to the SBP procedure. |
| | The DMG SBP parameters element may include one or more subelements shown in Table 2, and a meaning of each subelement is also shown in Table 2. In Table 2, a field length is in octets (octets). |
| DMG sensing measurement setup element (DMG Sensing Measurement Setup element) | Is used to carry configuration parameters requested by the DMG SBP initiator. These parameters are DMG sensing-common parameters. The DMG sensing measurement setup element includes one or more fields shown in FIG. 6. |

For example, the "configuration parameter of the first sensing measurement setup" in S230 may include at least one field of the DMG SBP parameters element and/or information carried in at least one field of the DMG sensing measurement setup element.

**Table 2**

| Name | Length | Meaning |
|---|---|---|
| Element identifier (Element ID) | 1 | Is used to identify the DMG SBP parameters element. |
| Length (length) | 1 | Indicates the length of the DMG SBP parameters element. |
| Element identifier extension (Element ID extension) | 1 | When a value of the element identifier is insufficient, the element identifier extension field and the element identifier field may be used together to identify the DMG SBP parameters element. |
| DMG parameters control (DMG SBP parameters control) | 5 | The subelement may include at least one field shown in Table 3, and a meaning of each field is also shown in Table 3. In Table 3, a field length is in bits (bits). |
| DMG sensing responder addresses (DMG sensing responder addresses) | N*6 | Meaning: The DMG SBP initiator provides a list or list of sensing responders. Each sensing responder may be indicated by a media access control (medium access control, MAC) address. |
| | | Rule: When a requested sensing type is a bistatic with coordination sensing type, if a DMG TX sensing responder addresses field and a DMG RX sensing responder addresses field do not exist, a sequence in this parameter can indicate TX and RX. For example, a 1^{st} to an M^{th} sensing responders are a TX list, an (M+1)^{th} to an (M+K)^{th} sensing responders are an RX list, and N=M+K. |
| DMG sensing responder identifiers (DMG sensing responder IDs) | N | Meaning: The DMG SBP initiator provides a list or list of sensing responders. Each sensing responder may be indicated by an identifier, and the identifier may be an association identifier (association identifier, AID) or an unassociated station identifier (unassociated station identifier, USID). |
| Monostatic (monostatic) | 1 | Meaning: The DMG SBP initiator requests a monostatic sensing type. |
| DMG TX sensing responder addresses (DMG TX sensing responder addresses) | M*6 | Meaning: This provides a MAC address of a sensing responder used as the TX. |
| | | Rule: When a DMG preferred TX sensing responder list=1, this exists; otherwise, this does not exist. |
| DMG TX sensing responder identifiers (DMG TX sensing responder IDs) | M | Meaning: This provides an identifier of the sensing responder used as the TX, where the identifier can be an AID or a USID. |
| | | Rule: When the DMG preferred TX sensing responder list=1, this exists; otherwise, this does not exist. |
| DMG RX sensing responder addresses (DMG RX sensing responder addresses) | K*6 | Meaning: This provides a MAC address of a sensing responder used as the RX. |
| | | Rule: When a DMG preferred RX sensing responder list=1, this exists; otherwise, this does not exist. |
| DMG RX sensing responder identifiers (DMG RX sensing responder IDs) | K | Meaning: This provides an identifier of the sensing responder used as the RX, where the identifier can be an AID or a USID. |
| | | Rule: When the DMG preferred RX sensing responder list=1, this exists; otherwise, this does not exist. |
| DMG TX-RX pair subelement (DMG TX-RX pair subelement) | Variable | Meaning: This indicates a sending direction of a sensing PPDU between sensing responders. In this application, sensing between the sensing responders may be referred to as TX-RX, or referred to as responder-to-responder (responder to responder, R2R). |
| | | Rule: When the requested sensing type is the bistatic with coordination sensing type, the subelement exists; otherwise, the subelement does not exist. |
| | | The subelement may include at least one field shown in Table 4, and a meaning of each field is also shown in Table 4. In Table 4, a field length is in bits (bits). |
| Sequential sounding (sequential sounding) | 1 | Meaning: A plurality of sensing responders perform sensing measurements simultaneously or in sequence. For example, a value being 0 indicates performing simultaneously, and the value being 1 indicates performing in sequence. |
| | | Rule: When the requested sensing type is a monostatic with coordination sensing type, the value of this field is set to 1 or 0. When the requested sensing type is another sensing type, the value is a reserved value. |
| DMG SBP report control (DMG SBP report control) | 1 | Is used to set a parameter related to a feedback of a sensing result. |
| | | The subelement may include at least one field shown in Table 5, and a meaning of each field is also shown in Table 5. In Table 5, a field length is in bits (bits). |

**Table 3**

| Field name | Field length | Field meaning |
|---|---|---|
| DMG sensing responder requested (DMG sensing responder requested) | 1 | Meaning: This indicates the DMG SBP initiator whether to participate in the DMG sensing as a sensing responder. |
| | | Rule: When the requested sensing type is the monostatic sensing type or a bistatic sensing type, this value is a reserved value. |
| number of DMG sensing responders (DMG number of sensing responders) | 4 | Meaning: This indicates a number of sensing responders that participate in sensing. |
| | | Rule: When the requested sensing type is the monostatic sensing type or the bistatic sensing type, this value may be a fixed value or a reserved value. |
| number of DMG sensing responders mandatory (DMG number of sensing responders mandatory) | 1 | Meaning: This indicates whether the number of DMG sensing responders needs to be met. |
| | | For example, a value being 0 indicates that a number of sensing responders participating in sensing measurements may be unequal to the DMG number of sensing responders, and the value being 1 indicates that the number of sensing responders participating in sensing measurements needs to be equal to the DMG number of sensing responders. |
| number of preferred DMG sensing responders (DMG number of preferred sensing responders) | 4 | Meaning: This indicates a number of sensing responders selected from a list. |
| | | Rule: The value cannot be greater than the value of the DMG number of sensing responders. If the DMG number of sensing responders is a reserved value, this value is also a reserved value. |
| preferred DMG sensing responder list (DMG preferred sensing responder list) | 1 | Meaning: This indicates whether a list of sensing responders is provided. |
| | | For example, a value being 0 indicates that the list is not provided, and the value being 1 indicates the list is provided. |
| Number of preferred DMG sensing responders mandatory (DMG number of preferred sensing responders mandatory) | 1 | Meaning: This indicates whether the number of preferred DMG sensing responders needs to be met. |
| | | For example, a value being 0 indicates that a number of sensing responders selected from the DMG preferred sensing responder list for participating in sensing measurements may be unequal to DMG number of preferred sensing responders, and the value being 1 indicates that the number of sensing responders selected from the DMG preferred sensing responder list for participating in the sensing measurements needs to be equal to the DMG number of preferred sensing responders. |
| Sensing initiator monostatic requested (Sensing initiator monostatic requested) | 1 | Meaning: This indicates the sensing initiator, that is, the DMG SBP responder, whether to perform monostatic sensing. For example, a value being 0 indicates not to request the DMG SBP responder to perform the monostatic sensing, and the value being 1 indicates to request the DMG SBP responder to perform the monostatic sensing. |
| | | Rule: When the requested sensing type is the monostatic with coordination sensing type, the value of this bit is 0 or 1. When the requested sensing type is another sensing type, a reserved bit is set. |
| preferred DMG TX sensing responder list (DMG preferred RX sensing responder list) | 1 | Meaning: This indicates whether a list of sensing responders used as transmitters is provided. For example, a value being 0 indicates the list is not provided, and the value being 1 indicates the list is provided. |
| preferred DMG RX sensing responder list (DMG preferred RX sensing responder list) | 1 | Meaning: This indicates whether a list of sensing responders used as receivers is provided. |
| | | For example, a value being 0 indicates the list is not provided, and the value being 1 indicates the list is provided. |
| Number of DMG TX sensing responders (number of TX sensing responder) | 4 | Meaning: This indicates a number of sensing responders used as transmitters. |
| | | Rule: When the requested sensing type is the bistatic with coordination sensing type, this field has a specific value; otherwise, this field is a reserved field. |
| Number of DMG TX sensing responders mandatory (number of TX sensing responder mandatory) | 1 | Meaning: This indicates whether the number of TX sensing responder needs to be met. For example, a value being 0 indicates that the number of sensing responders used as TXs may be unequal to the number of TX sensing responder, and the value being 1 indicates that the number of sensing responders used as TXs needs to be equal to the number of TX sensing responder. |
| | | Rule: When the requested sensing type is the bistatic with coordination sensing type, the value of this field is 0 or 1; otherwise, this field is a reserved field. |
| Number of DMG RX sensing responders (number of RX sensing responder) | 4 | Meaning: This indicates a number of sensing responders used as receivers. |
| | | Rule: When the requested sensing type is the bistatic with coordination sensing type, this field has a specific value; otherwise, this field is a reserved field. A sum of a value of the number of TX sensing responder and a value of the number of RX sensing responder cannot be greater than the value of the DMG number of sensing responders. |
| Number of DMG RX sensing responders mandatory (number of RX sensing responder mandatory) | 1 | Meaning: This indicates whether the number of RX sensing responder needs to be met. For example, a value being 0 indicates that the number of sensing responders used as RXs may be unequal to the number of RX sensing responder, and the value being 1 indicates that the number of sensing responders used as RXs needs to be equal to the number of RX sensing responder. |
| | | Rule: When the requested sensing type is the bistatic with coordination sensing type, the value of this field is 0 or 1; otherwise, this field is a reserved field. |
| Number of preferred DMG TX sensing responders (number of preferred TX sensing responder) | 4 | Meaning: This indicates a number of responders that are used as transmitters and that are selected from the DMG TX sensing responder addresses. |
| | | Rule: When the requested sensing type is the bistatic with coordination sensing type, this field has a specific value; otherwise, this field is a reserved field. The value cannot be greater than the number of TX sensing responder. |
| Number of preferred DMG RX sensing responders (number of preferred RX sensing responder) | 4 | Meaning: This indicates a number of responders that are used as receivers and that are selected from the DMG RX sensing responder addresses. |
| | | Rule: When the requested sensing type is the bistatic with coordination sensing type, this field has a specific value; otherwise, this field is a reserved field. The value cannot be greater than the number of RX sensing responder. |
| DMG SBP expiry exponent (DMG SBP Expiry Exponent) | 4 | Indicates an active time of DMG SBP, namely, first duration. A value of the DMG SBP expiry exponent field is a DMG SBP expiry exponent. There is a correspondence between the DMG SBP expiry exponent and the first duration, and the first duration may be determined based on the DMG SBP expiry exponent. |
| | | For example, the correspondence between the first duration and the value of the DMG SBP expiry exponent may be: the first duration=2^(DMG SBP expiry exponent+8) milliseconds. |

**Table 4**

| Field name | Field length | Field meaning |
|---|---|---|
| Subelement identifier (subelement ID) | 8 | Is used to identify the DMG TX-RX pair subelement. |
| Subelement length (length) | 8 | Indicates a length of the DMG TX-RX pair subelement. |
| Number of TX-RX pair (Number of TX-RX Pair) | 8 | Indicates a number of DMG TX-RX pairs. |
| DMG TX-RX pair 1 | 16 | Meaning: A TX sensing responder ID and an RX |
| (DMG TX-RX pair 1) | | sensing responder ID indicate a direction of a sensing measurement between sensing responders. |
| | | For example, in the field, the RX is arranged in the front, and the TX is arranged in the back. |
| ··· | ··· | ··· |
| DMG TX-RX pair Q (DMG TX-RX pair Q) | 16 | Meaning: A TX sensing responder ID and an RX sensing responder ID indicate a direction of a sensing measurement between sensing responders. |
| | | For example, in the field, the RX is arranged in the front, and the TX is arranged in the back. |

It should be understood that, in Table 4, an order of the DMG TX-RX pair 1 to the DMG TX-RX pair Q in the DMG TX-RX pair subelement may indicate a sensing measurement order of pairs. In other words, a sensing measurement may be sequentially performed on the DMG TX-RX pair 1, a DMG TX-RX pair 2, ..., and the DMG TX-RX pair Q.

**Table 5**

| Field name | Field length | Field meaning |
|---|---|---|
| Reporting frequency (Report Frequency) | 1 | Meaning: Feed back a report after each measurement instance ends or feed back a report after a plurality of measurement instances end. For example, a value being 0 indicates feeding back a report after each measurement instance ends, and the value being 1 indicates feeding back a report after a plurality of measurement instances end. |
| Report per sensing responder (Report Per Sensing Responder) | 1 | Meaning: A measurement result of only one sensing responder or measurement results of a plurality of sensing responders are fed back each time. |
| | | For example, a value being 0 indicates the measurement result of only one sensing responder is fed back each time, and the value being 1 indicates the measurement results of a plurality of sensing responders are fed back each time. |
| Sensing responder location configuration information requested (Sensing Responder LCI Requested) | 1 | Meaning: This indicates whether to send a location of a sensing responder and a measurement report together. |
| | | For example, a value being 0 indicates to feed back the location of the sensing responder, and the value being 1 indicates not to feed back the location of the sensing responder. |
| Sensing responder orientation requested (Sensing Responder Orientation Requested) | 1 | Meaning: This indicates whether to send an antenna orientation of a sensing responder and a measurement report together. |
| | | For example, a value being 0 indicates to feed back the antenna orientation of the sensing responder, and the value being 1 indicates not to feed back the antenna orientation of the sensing responder. |
| Sensing responder timestamp requested (Sensing Responder Timestamp Requested) | 1 | Meaning: This indicates whether to feed back measurement occurrence timestamp information and a measurement report together. |
| | | For example, a value being 0 indicates to feed back the measurement occurrence timestamp information, and the value being 1 indicates not to feed back the measurement occurrence timestamp information. |
| Reserved (Reserved) | 3 | Undefined |

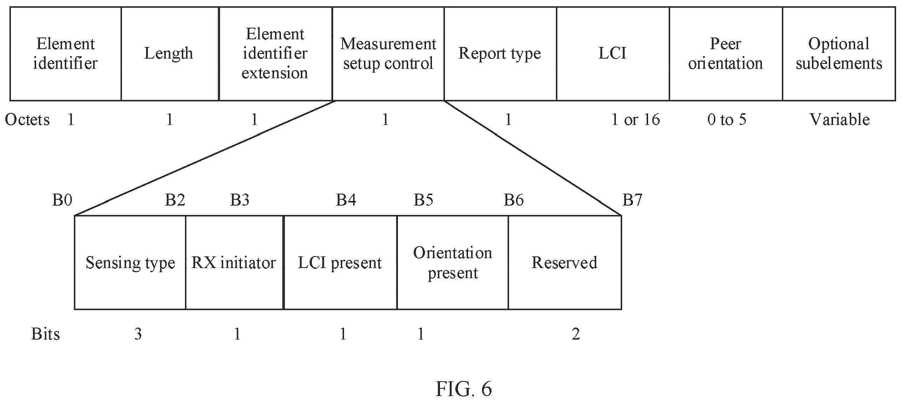

FIG. 6 is a diagram of a format of the DMG sensing measurement setup element. The DMG sensing measurement setup element may be used in a DMG sensing measurement setup. As shown in FIG. 6, the element includes at least one of the following fields: an element identifier (element ID) field, a length (length) field, an element identifier extension (element ID extension) field, a measurement setup control (measurement setup control) field, a report type (report type) field, a location configuration information (location configuration information, LCI) field, a peer orientation (peer orientation) field, and optional subelements (optional subelements). The measurement setup control field includes at least one of the following fields: a sensing type (sensing type) field, an RX initiator (RX initiator) field, an LCI present (LCI present) field, an orientation present (orientation present) field, and a reserved (reserved) field. A so-called RX initiator is an initiator that is used as a sensing receiver.

The sensing type field is used in the DMG SBP Request frame to indicate a sensing type of sensing performed in a DMG SBP Request process. This field occupies 3 bits. Values 0 to 3 are defined, and values 4 to 7 are reserved bits. Table 6 describes a meaning of the sensing type field.

**Table 6**

| Value | Meaning |
|---|---|
| 0 | Monostatic with coordination |
| 1 | Bistatic with coordination |
| 2 | Bistatic |
| 3 | Multistatic |
| 4 to 7 | Reserved |

There is no indication of a monostatic type. However, in the SBP, the DMG SBP initiator may request to perform monostatic SBP. Therefore, this objective may be achieved in two manners: One manner is to use the monostatic field in Table 2, and the other manner is to use the value 4 to indicate the monostatic type in Table 6.

In the foregoing example of the DMG SBP Request frame, the sensing type field may indicate the sensing type of sensing performed in the DMG SBP Request process. In addition, the monostatic type may be indicated by the monostatic (monostatic) field in Table 2 in addition to being indicated by the value in Table 6. In other words, the sensing type field or the monostatic field may carry seventh information, and the seventh information indicates that the type of the SBP is the monostatic type. In addition, the sensing type field may further carry first information or fourth information, where the first information indicates that the type of the SBP is a bistatic with coordination type, and the fourth information indicates that the type of the SBP is a monostatic with coordination type.

For a bistatic with coordination SBP type, for example, as shown in FIG. 3(h), a part of sensing responders is used as a sensing transmitter, and the other part of the sensing responders is used as a sensing receiver. In this application, a sensing responder used as the sensing transmitter is referred to as a first sensing responder, and the SBP initiator may indicate one or more first sensing responders. Similarly, a sensing responder used as the sensing receiver may be referred to as a second sensing responder, and the SBP initiator may indicate one or more second sensing responders. Therefore, the DMG TX sensing responder addresses field in Table 2, the DMG TX sensing responder identifiers field in Table 2, the number of DMG TX sensing responders field in Table 3, the number of DMG TX sensing responders mandatory field in Table 3, and the number of preferred DMG TX sensing responders field in Table 3 may all be considered as information about the first sensing responder; and the DMG RX sensing responder addresses field in Table 2, the DMG RX sensing responder identifiers field in Table 2, the number of DMG RX sensing responders field in Table 3, the number of DMG RX sensing responders mandatory field in Table 3, and the number of preferred DMG RX sensing responders field in Table 3 may all be considered as information about the second sensing responder. Further, both the information about the first sensing responder and the information about the second sensing responder may be referred to as second information. In other words, the second information may be carried in a plurality of fields.

Based on the foregoing solution, the DMG SBP Request frame may indicate the information about the sensing responder used as the sensing transmitter and the information about the sensing responder used as the sensing receiver, so that sensing between sensing responders in the bistatic with coordination sensing type can be implemented, and sensing efficiency can be improved.

In addition, for the bistatic with coordination SBP type, in Table 2, the DMG TX-RX pair subelement is used to indicate a sending direction of a sensing PPDU between sensing responders. In other words, the DMG TX-RX pair subelement is used to indicate a correspondence between the first sensing responder and the second sensing responder. Based on the DMG TX-RX pair subelement, the DMG SBP responder may learn a sensing responder that is used as the RX and that corresponds to a sensing responder used as the TX. For example, the DMG TX-RX pair 1 field in the DMG TX-RX pair subelement is A and B. Therefore, the DMG SBP responder may learn that A is the RX and B is the TX, that is, the sending direction of the sensing PPDU between the sensing responders is from B to A. In this application, information carried in the DMG TX-RX pair subelement may be referred to as third information.

Based on the foregoing solution, the DMG SBP Request frame may indicate the sending direction of the sensing PPDU between the sensing responders, so that the sensing between the sensing responders in the bistatic with coordination sensing type can be implemented, and sensing efficiency can be improved.

For the monostatic with coordination type, the sequential sounding field in Table 2 may be used to indicate a plurality of sensing responders to perform sensing measurements simultaneously or in sequence, and the sensing initiator monostatic requested field in Table 3 may be used to indicate the DMG SBP responder whether to participate in the monostatic sensing as a sensing responder. Information carried in the sequential sounding field may be referred to as fifth information, and information carried in the sensing initiator monostatic requested field may be referred to as sixth information.

For any one of the foregoing sensing types, the DMG SBP report control field in Table 2 is used to set a parameter related to a feedback of a sensing result, and information carried in the DMG SBP report control field may be referred to as eighth information. Specifically, as shown in Table 5, the eighth information may include at least one of the following: feeding back after each measurement ends or feeding back after a plurality of measurements end, feeding back a sensing measurement result of one sensing responder each time or feeding back sensing measurement results of a plurality of sensing responders each time, feeding back whether a report includes location configuration information of the sensing responder, feeding back whether the report includes an antenna orientation of the sensing responder, and feeding back whether the report includes a time when the sensing measurement occurs, where each item may be carried in a field in Table 5.

Based on the foregoing solution, the DMG SBP initiator requests the parameter related to the feedback of the sensing result, so that the DMG SBP initiator can manage content and a feedback manner of a DMG SBP Report frame, to improve flexibility of feeding back the sensing result and improve sensing efficiency.

Optionally, when the SBP responder sends the fourth message to the sensing responder, the fourth message may include the DMG sensing measurement setup element, and the DMG sensing measurement setup element is used to configure a measurement setup parameter for the sensing responder. To support a sensing measurement performed between sensing responders (TX-RX or R2R mentioned above) in the bistatic with coordination (bistatic with coordination) type, a field may be added to the DMG sensing measurement setup element (DMG Sensing Measurement Setup element) shown in FIG. 6 to set a TX role or an RX role. After the DMG SBP responder obtains a list of sensing responders used as TXs and a list of sensing responders used as RXs, the DMG SBP responder may set the sensing responder to be the TX or the RX based on the lists. In an implementation, the DMG SBP responder may include information about the TX or the RX by using the measurement setup control field in the DMG sensing measurement setup element, and the sensing responder may determine whether the sensing responder is the TX or the RX based on the information. For example, B6 and B7 in FIG. 6 may be set to a DMG R2R TX field and a DMG R2R RX field, and each field uses one bit. That the DMG R2R TX field is set to 1 indicates that the sensing responder is used as the TX, and that the DMG R2R RX field is set to 1 indicates that the sensing responder is used as the RX.

Optionally, the SBP initiator may request a plurality of types of sensing in one SBP request. In other words, different types of SBP shown in FIG. 3(a) to FIG. 3(h) may exist simultaneously. In this case, the DMG SBP Request frame may include one or more DMG sensing measurement setup elements, where each DMG sensing measurement setup element may be used to establish a sensing measurement, and each DMG sensing measurement setup element corresponds to one sensing type. A format of each DMG sensing measurement setup element may be shown in FIG. 6.

In addition, in the foregoing case, if a DMG sensing measurement setup identifier is determined by the DMG SBP initiator, the DMG sensing measurement setup identifier field in Table 1 may be set to a reserved value, and further, the DMG sensing measurement setup identifier may be carried by the DMG sensing measurement setup element in the DMG SBP Request frame. Specifically, an implementation in which the sensing measurement setup element carries the DMG sensing measurement setup identifier may be as follows: To identify each sensing measurement, each DMG sensing measurement setup element may include a DMG sensing measurement setup identifier (DMG sensing measurement setup ID) field, where the DMG sensing measurement setup identifier field is used to indicate the DMG sensing measurement setup identifier. For example, a length of the DMG sensing measurement setup identifier field may be one octet, and a location of the DMG sensing measurement setup identifier field may be located between the element identifier extension field and the measurement setup control field shown in FIG. 6.

Optionally, when the DMG SBP Request frame may include a plurality of DMG sensing measurement setup elements, the DMG SBP Request frame may also include a plurality of DMG SBP parameters elements. The plurality of DMG sensing measurement setup elements may one-to-one correspond to the plurality of DMG SBP parameters elements, and one DMG sensing measurement setup element and one DMG SBP parameters element correspond to one sensing measurement.

As an example, when a plurality of sensing types are requested, that the SBP is successfully established indicates that all requested types of sensing measurements are successfully established, and that the SBP fails to be established may indicate that not all requested types of sensing measurements can be established. In addition, the DMG SBP Response frame may indicate specific types in which sensing measurements are successfully established, and the DMG SBP initiator may further determine whether to resend a DMG SBP Request frame to carry the sensing types in which sensing measurements can be successfully established.

Optionally, the DMG SBP initiator may request a type of a measurement report by using the report type (Report Type) field in the DMG sensing measurement setup element, and the DMG SBP responder may request, based on a request of the field, another sensing responder to feed back a measurement report of this type. For example, as shown in FIG. 6, a length of the report type field is one octet, and values 1 to 7 of the report type field may respectively indicate the following report types: channel state information (channel state information, CSI), DMG sensing image range direction (DMG sensing image range direction), DMG sensing image range-doppler (DMG sensing image range-doppler), DMG sensing image range-direction (DMG sensing image range-direction), DMG sensing image doppler-direction (DMG sensing image doppler-direction), DMG sensing image range-doppler direction (DMG sensing image range-doppler direction), and target (target).

Optionally, the DMG sensing measurement setup element further includes a DMG sensing scheduling subelement (DMG sensing scheduling subelement), where the DMG sensing scheduling subelement is used to set an occurrence time, a frequency, a period, a quantity of times of measurements, and the like. For example, the DMG SBP initiator may use the DMG sensing scheduling subelement to request to start a burst, and the DMG SBP responder may set to perform a sensing measurement with another sensing responder based on the time. The DMG sensing scheduling subelement may include at least one field shown in Table 7. A meaning of each field is also shown in Table 7. In Table 7, a unit of a field length is an octet.

**Table 7**

| Field name | Field length (octets) | Field meaning |
|---|---|---|
| Subelement identifier (subelement ID) | 1 | Is used to identify the DMG sensing scheduling subelement. |
| Subelement length (length) | 1 | Is used to indicate a length of the DMG sensing scheduling subelement. |
| Start of burst (start of burst) | 4 | Is used to indicate a start time of a burst (burst). |
| Inter burst interval (inter burst interval) | 1 | Is used to indicate an interval time between consecutive bursts (burst). |
| Intra burst interval (intra burst interval) | 2 | Is used to indicate an interval time between consecutive measurement instances (instance) in a burst (burst). |
| Number TX Beams Per Instance (number TX beams per instance) | 1 | Is used to indicate a quantity of beams used for a measurement per instance. |
| Repeat per instance (repeat per instance) | 1 | Is used to indicate a number of repetition times of measurements per instance. |
| Number bursts (number bursts) | 1 | Is used to indicate a number of repetition times of bursts (burst). |

The following describes in detail a recommended parameter of the DMG SBP Response frame provided in this application. The recommended parameter may include at least one of an SBP-specific parameter and a DMG sensing-common parameter. The SBP-specific parameter may be placed in the DMG SBP parameters element (DMG SBP Parameters element), and the DMG sensing-common parameter may be indicated by reusing the existing DMG sensing measurement setup element (DMG Sensing Measurement Setup element) in DMG sensing. The SBP-specific parameter includes at least one parameter in the DMG SBP parameters element, and the DMG sensing-common parameter includes at least one parameter in the DMG sensing measurement setup element.

Specifically, the DMG SBP Response frame is also an action frame, and is sent by the DMG SBP responder to the DMG SBP initiator. An action field (action field) of the DMG SBP Response frame may include at least one field shown in Table 8.

**Table 8**

| Field name | Field meaning |
|---|---|
| Category (Category) | Refer to a definition in the 802.11 series standards. The category field is a common field in the 802.11 series standards. For a meaning of the category field, refer to any standard in the 802.11 series standards, for example, the 802.11ax standard or the 802.11bf standard. |
| Unprotected DMG action (Unprotected DMG Action) | Refer to a definition in the 802.11 series standards. The unprotected DMG action field is a common field in the 802.11 series standards. |
| | For a meaning of the unprotected DMG action field, refer to any standard in the 802.11 series standards, for example, the 802.11ax standard or the 802.11bf standard. |
| Dialog token (Dialog Token) | Is consistent with that in the DMG SBP Request frame. |
| Status code (Status Code) | Indicates that the DMG SBP is successfully established or fails to be established. |
| DMG sensing measurement setup identifier (DMG sensing measurement setup ID) | If this is set by the DMG SBP initiator, the DMG sensing measurement setup identifier herein needs to be consistent with that in the DMG SBP Request frame. If the status code is SUCCESS, the value can also be set by the DMG SBP responder. |
| DMG SBP parameters element (DMG SBP Parameters element) | If the SBP responder accepts the DMG SBP Request, a parameter in this element can be consistent with that in the DMG SBP Request. If the DMG SBP responder does not accept the DMG SBP Request, this element indicates being provided by the DMG SBP responder and indicates the recommended parameter from the DMG SBP responder. Similarly, the DMG SBP parameters element may include at least one subelement shown in Table 2, and a meaning of each subelement is also shown in Table 2. |
| DMG sensing measurement setup element (DMG Sensing Measurement Setup element) | If the DMG SBP responder accepts the DMG SBP Request, a parameter in this element is the consistent with that in the DMG SBP Request. If the DMG SBP responder does not accept the DMG SBP Request, this element indicates a parameter provided by the DMG SBP responder and indicates the recommended parameter from the DMG SBP responder. Similarly, a field included in the DMG sensing measurement setup element may include at least one field shown in FIG. 6. |
| DMG sensing image range axis LUT (DMG Sensing Image Range Axis LUT) | Is used to carry auxiliary information of a measurement result. For details, refer to a definition in the 802. 1 1bf protocol. For example, refer to Section 9.4.2.323 in the 802. 1 1bf protocol draft (Draft) 0.3. |
| DMG sensing image doppler axis LUT targets (DMG Sensing Image Doppler Axis LUT targets) | Is used to carry auxiliary information of a measurement result. For details, refer to a definition in the 802. 1 1bf protocol. For example, refer to Section 9.4.2.324 in the 802. 1 1bf protocol draft (Draft) 0.3. |

It should be understood that for the DMG SBP parameters element, fields included in the DMG sensing measurement setup element, and content carried in each field in the DMG SBP Response frame, refer to the DMG SBP parameters element and the DMG sensing measurement setup element in the DMG SBP Request frame. Details are not described herein again. These fields included in the DMG SBP Request frame indicate configuration parameters requested by the DMG SBP initiator. These fields included in the DMG SBP Response frame indicate recommended parameters from the DMG SBP responder. For example, a configuration related to the SBP report control field in the DMG SBP Request frame means a configuration from the DMG SBP responder requested by the DMG SBP initiator, that is, how the DMG SBP responder needs to feed back a report to the DMG SBP initiator. A setting related to the SBP report control field in the DMG SBP Response frame means a configuration expected by the DMG SBP responder, that is, how the DMG SBP responder expects to feed back a report to the DMG SBP initiator.

It should be further understood that, if the DMG sensing measurement setup identifier is determined by the DMG SBP responder, the DMG sensing measurement setup identifier field in Table 8 may be set to a reserved value, and further, the DMG sensing measurement setup identifier may be carried by the DMG sensing measurement setup element in the DMG SBP Response frame. A manner in which the sensing measurement setup element carries the DMG sensing measurement setup identifier may be as follows: To identify each sensing measurement, each DMG sensing measurement setup element may include a DMG sensing measurement setup identifier field, where the DMG sensing measurement setup identifier field is used to indicate the DMG sensing measurement setup identifier. For example, a length of the DMG sensing measurement setup identifier field may be one octet, and a location of the DMG sensing measurement setup identifier field may be located between the element identifier extension field and the measurement setup control field shown in FIG. 6.

In addition, if the DMG sensing measurement setup identifier is determined by the DMG SBP responder, the DMG sensing measurement setup identifier field in the DMG SBP Request frame may be set to a reserved value. If the DMG sensing measurement setup identifier is determined by the DMG SBP initiator, the DMG sensing measurement setup identifier field in the DMG SBP Response frame may be set to a reserved value or reuse a value of the DMG sensing measurement setup identifier field in the DMG SBP Request frame.

Based on the foregoing solution, if the first SBP fails to be established, the second message may further include the recommended parameter for the first sensing measurement setup. In this way, the DMG SBP initiator may re-initiate a DMG SBP Request based on the recommended parameter in the DMG SBP Response frame, to increase a success rate of the SBP setup can be improved, thereby improving sensing efficiency.

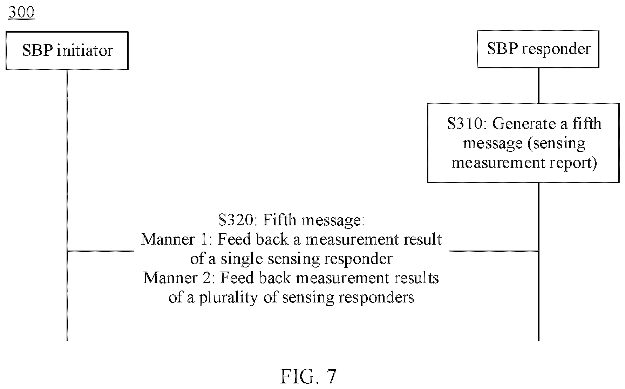

FIG. 7 is a schematic flowchart of a sensing method 300 according to an embodiment of this application. For FIG. 7, refer to descriptions in FIG. 1 to FIG. 6. The method 300 may be applied to an SBP reporting phase.

S310: An SBP responder generates a fifth message.

The fifth message is used to report a sensing measurement result of a sensing responder, that is, the fifth message carries a sensing measurement report of the sensing responder, that is, the fifth message carries an SBP report.

In an example, the fifth message may be an SBP report (SBP report) frame.

Optionally, the fifth message includes an identifier of first SBP. For example, the identifier of the first SBP may be a value of a dialog token (dialog token), where the dialog token may be used to mark an SBP request, and the value of the dialog token may be the same as a value of a dialog token that is set by an SBP initiator in an SBP request frame.

If the SBP responder is a sensing transmitter or the SBP responder is not the sensing responder, the SBP responder may receive the sensing measurement result from a sensing receiver. If the SBP responder is a sensing receiver, the SBP responder may obtain the sensing measurement result based on a received sensing PPDU.

S320: The SBP responder sends the fifth message to the SBP initiator, and correspondingly, the SBP initiator receives the fifth message from the SBP responder.

A feedback manner of the SBP report frame and a parameter carried in the SBP report frame should be consistent with those requested by the SBP initiator, or should be consistent with a result negotiated by the SBP initiator and the SBP responder.

Optionally, the fifth message may be determined based on the eighth information in the method 200. In other words, the SBP responder feeds back the responded sensing measurement result to the SBP initiator based on the request of the SBP initiator, and the sensing measurement result is a result related to the sensing responder. For example, if the eighth information indicates to feed back a report including location configuration information of the sensing responder, the SBP responder may request the location configuration information of the sensing responder from the sensing responder, so that the SBP responder may obtain the location configuration information of the sensing responder from the sensing responder and feed back the corresponding location configuration information to the SBP initiator.

As an example, the SBP report frame is fed back in the following two manners.

Manner 1: The SBP responder feeds back a measurement result of a single sensing responder.

For example, the SBP responder may send the SBP report frame to the SBP initiator after obtaining a sensing measurement result of any sensing responder.

Optionally, in Manner 1, before S310, the SBP initiator may send the eighth information to the SBP responder, where the eighth information includes an indication for feeding back a sensing measurement result of one sensing responder each time. For details, refer to the method 200.

Manner 2: The DMG SBP responder feeds back measurement results of a plurality of sensing responders.

For example, the SBP responder may send the SBP report frame to the SBP initiator after obtaining the sensing measurement results of the plurality of sensing responders.

For example, in Manner 2, the SBP responder may perform feedback by using an aggregated MAC protocol data unit (aggregated MAC protocol data unit, A-MPDU).

Optionally, in Manner 2, before S310, the SBP initiator may send the eighth information to the SBP responder, where the eighth information includes an indication for feeding back sensing measurement results of a plurality of sensing responders each time. For details, refer to the method 200.

It should be understood that the parameter carried in the SBP report frame is unrelated to a feedback manner.

Based on the foregoing solution, the SBP responder may report the sensing measurement result to the SBP initiator in different manners, to improve flexibility of feeding back the sensing result, thereby improving sensing efficiency.

It should be understood that, in the method 300 in this application, the SBP initiator and the SBP responder may be devices used for WLAN high-frequency sensing, and may be respectively referred to as a DMG SBP initiator and a DMG SBP responder. Similarly, the SBP report frame is a frame used for the WLAN high-frequency sensing, and may also be referred to as a DMG SBP Report frame. Optionally, the method 300 in this application may also be applied to a sub-7 GHz frequency band. This is not limited. For ease of description, the following uses the DMG SBP initiator, the DMG SBP responder, and the DMG SBP Report frame as examples for description.

The DMG SBP Report frame may include at least one field shown in Table 9.

**Table 9**

| Field name | Field meaning |
|---|---|
| Category (Category) | Refer to a definition in the 802.11 series standards. The category field is a common field in the 802.11 series standards. For a meaning of the category field, refer to any standard in the 802.11 series standards, for example, the 802.11ax standard or the 802.11bf standard. |
| Unprotected DMG action (Unprotected DMG Action) | Refer to a definition in the 802.11 series standards. The unprotected DMG action field is a common field in the 802.11 series standards. For a meaning of the unprotected DMG action field, refer to any standard in the 802.11 series standards, for example, the 802.11ax standard or the 802.11bf standard. |
| Dialog token (Dialog Token) | Is consistent with that in the DMG SBP Request frame. |
| DMG sensing report control element (DMG Sensing Report Control element) | Is used to carry some fields in a DMG sensing report element. |
| DMG sensing report | Is used to carry a sensing measurement result. |
| element (DMG Sensing Report element) | |

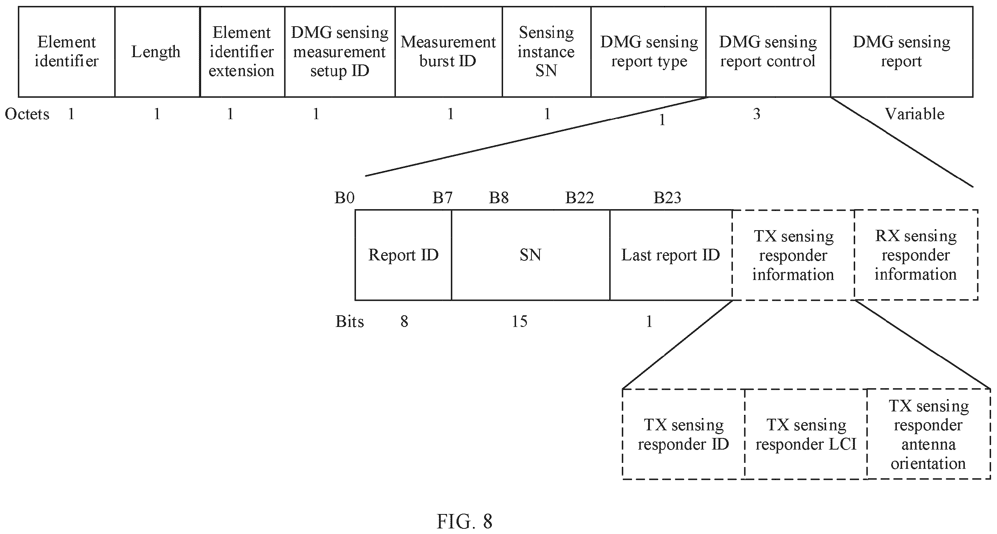

FIG. 8 is a diagram of a format of the DMG sensing report control element. As shown in FIG. 8, the DMG sensing report control element (DMG Sensing Report Control element) includes at least one of the following: an element identifier (element ID) field, a length (length) field, an element ID extension (element ID extension) field, a DMG sensing measurement setup identifier (DMG sensing measurement setup ID) field, a measurement burst identifier (measurement burst ID) field, a sensing instance sequence number (sensing instance sequence number, sensing SN) field, a DMG sensing report type (DMG sensing report type) field, a DMG sensing report control (DMG sensing report control) field, and a DMG sensing report (DMG Sensing Report) field. The DMG sensing report control field includes at least one of the following: a report identifier (report ID) subfield, a sequence number (SN) subfield, and a last report identifier (last report ID) subfield.

Optionally, when sending the DMG SBP Report frame, the DMG SBP responder may include, based on a request of a DMG SBP Request frame, one or more of location configuration information (LCI), a MAC address or an identifier (for example, an AID or a USID), an antenna orientation, a corresponding measurement occurrence timestamp (Timestamp), and the like of a corresponding sensing responder. The information may be carried in the DMG sensing report control element and the DMG sensing report element.

Optionally, the fifth message may include ninth information, and the ninth information indicates a sensing transmitter and a sensing receiver corresponding to the sensing measurement result.

Specifically, for a sensing measurement performed between sensing responders in a bistatic with coordination sensing type, the DMG SBP Report frame may indicate a TX-RX pair corresponding to the report.

In an implementation, an ID of TX and an ID of RX, that is, a TX sensing responder ID and an RX sensing responder ID, may be used, and the two IDs may be placed in the DMG sensing report control field. For example, still as shown in FIG. 8, the DMG sensing report control field may further include at least one of the following: a TX sensing responder information subfield and an RX sensing responder information subfield, which are respectively used to indicate information about a sensing responder used as the TX and information about a sensing responder used as the RX corresponding to this report. As an example, the TX sensing responder information subfield and the RX sensing responder information subfield each may include eight octets. In this case, the DMG sensing report control field may be extended to 19 octets. FIG. 8 shows an example of content included in the TX sensing responder information subfield. As shown in FIG. 8, the TX sensing responder information subfield may include at least one of the following: a TX sensing responder identifier subfield, a TX sensing responder LCI subfield, and a TX sensing responder antenna orientation subfield, which respectively occupy 1, 2, and 5 octets. The TX sensing responder LCI and the TX sensing responder antenna orientation are optional subfields. This is similar to the RX sensing responder information subfield, and details are not described herein again.

It should be understood that the LCI may be carried in the DMG sensing report element, or may be carried in the TX sensing responder information field, or may be carried in the RX sensing responder information field. This is not limited in this application.

Based on the foregoing solution, for the sensing measurement between the sensing responders, the SBP responder may report a measurement result of R2R (that is, between a sensing responder used as a sensing transmitter and a sensing responder used as a sensing receiver) to the SBP initiator. In this way, an error rate of a DMG SBP report can be reduced, and sensing efficiency can be improved.

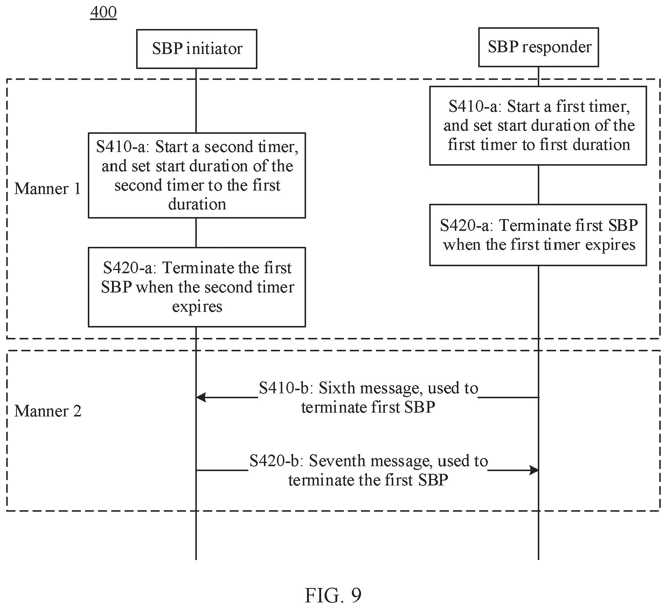

FIG. 9 is a schematic flowchart of a sensing method 400 according to an embodiment of this application. For FIG. 9, refer to descriptions in FIG. 1 to FIG. 8. The method 400 may be applied to an SBP termination phase. The method 400 may include the following three manners.

Manner 1: An SBP responder and an SBP initiator terminate first SBP by using a timer.

S410-a: The SBP responder starts a first timer, and sets start duration of the first timer to first duration. Correspondingly, the SBP initiator may start a second timer, and set start duration of the second timer to the first duration.

For example, the first duration may be preset duration. In an implementation, before S410, the SBP initiator indicates the first duration to the SBP responder. For example, the SBP request frame in the method 200 may carry tenth information, the tenth information indicates the first duration, and the tenth information may be carried in a DMG SBP expiry exponent field. As shown in Table 3, there is a correspondence between the DMG SBP expiry exponent and the first duration, and the first duration may be determined based on the DMG SBP expiry exponent. In another implementation, the first duration may be predefined in a protocol.

The SBP responder may start the first timer in any one of the following cases: for example, start the first timer after a second message is sent, or after an acknowledgment (Acknowledgement, ACK) of the second message is received, or after a first SBP report frame is sent. Similarly, the SBP initiator may start the second timer in any one of the following cases: for example, may start the second timer after the second message is received, or after the ACK of the second message is sent, or after a first SBP report frame is received.

It should be understood that, in the method 400, the second message indicates that the first SBP is successfully established.

S420-a: The SBP responder terminates the first SBP when the first timer expires. Correspondingly, the SBP initiator may terminate the first SBP when the second timer SBP expires.

It should be understood that the timer expires (expire) may be understood as that the timer runs out or the timer returns to zero.

Optionally, when the SBP responder interacts with the SBP initiator by using the sensing measurement result, and when the SBP responder and the sensing responder perform a sensing measurement, the first timer and the second timer may be paused.

Specifically, the DMG SBP initiator and the DMG SBP responder each set a countdown clock. The DMG SBP initiator starts timing when receiving a DMG SBP Response frame carrying a status code=SUCCESS, and the DMG SBP responder starts timing when receiving an Ack (corresponding to the DMG SBP Response frame, and indicating that the DMG SBP initiator receives the DMG SBP Response frame), that is, starts timing when DMG SBP is successfully established. When a sensing measurement occurs or a result is fed back, the timing is paused. Otherwise, the timing continues. When the timing returns to zero, the DMG SBP is terminated. Countdown times each are the first duration, may be exchanged in a DMG SBP setup phase, and may be indicated by the DMG SBP expiry exponent field.

Based on the foregoing solution, the SBP responder and the SBP initiator may terminate the first SBP by using the timer, reduce an SBP termination procedure, thereby reducing signaling overheads.

Manner 2: An SBP responder and an SBP initiator terminate first SBP by using an SBP Termination frame.

S410-b: The SBP responder sends a sixth message to the SBP initiator, where the sixth message is used to terminate the first SBP.

S420-b: The SBP initiator sends a seventh message to the SBP responder, where the seventh message is used to terminate the first SBP.

For example, the sixth message and the seventh message may be SBP termination (SBP termination) frames.

Optionally, the sixth message or the seventh information includes eleventh information, and the eleventh information indicates to terminate all SBP of a bistatic with coordination type, or indicate to terminate all SBP of a monostatic type.

It should be understood that, in the method 400 in this application, the SBP initiator and the SBP responder may be devices used for WLAN high-frequency sensing, and may be respectively referred to as a DMG SBP initiator and a DMG SBP responder. Similarly, the SBP Termination frame is a frame used for the WLAN high-frequency sensing, and may also be referred to as a DMG SBP Termination frame. Optionally, the method 400 in this application may also be applied to a sub-7 GHz frequency band. This is not limited. For ease of description, the following uses the DMG SBP initiator, the DMG SBP responder, and the DMG SBP Termination frame as examples for description.

Specifically, the DMG SBP initiator or the DMG SBP responder sends the DMG SBP Termination frame, and performs termination on the DMG SBP sensing based on a sensing type. The SBP Termination frame may include at least one field shown in Table 10.

**Table 10**

| Field name | Field meaning |
|---|---|
| Category (Category) | Refer to a definition in the 802.11 series standards. The category field is a common field in the 802.11 series standards. For a meaning of the category field, refer to any standard in the 802.11 series standards, for example, the 802.11ax standard or the 802.11bf standard. |
| Unprotected DMG action (Unprotected DMG Action) | Refer to a definition in the 802.11 series standards. The unprotected DMG action field is a common field in the 802.11 series standards. For a meaning of the unprotected DMG action field, refer to any standard in the 802.11 series standards, for example, the 802.11ax standard or the 802.11bf standard. |
| DMG sensing measurement setup identifier (DMG Sensing Measurement Setup ID) | Identifies a terminated DMG sensing measurement. |
| DMG SBP termination control (DMG SBP Termination Control) field | Is used to provide control information for DMG SBP termination. |
| DMG SBP parameters element (DMG SBP Parameters element) | The element is placed in the DMG SBP Termination frame, to indicate that parameters recommended by the element may be used for a next DMG SBP setup. For content carried in the element, refer to a DMG SBP Request frame. |

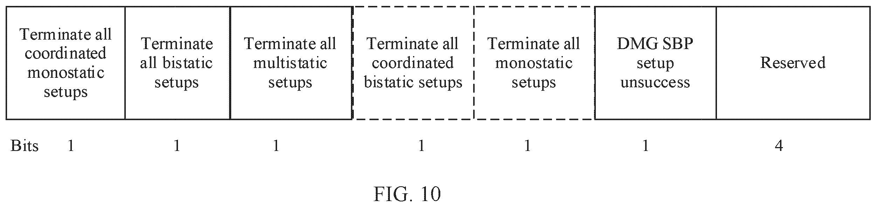

The DMG SBP termination control field may include at least one of the following: a terminate all coordinated monostatic setups (terminate all coordinated monostatic setups) field, a terminate all bistatic setups (terminate all bistatic setups) field, a terminate all multistatic setups (terminate all multistatic setups) field, a DMG SBP setup unsuccess (DMG SBP setup unsuccess) field, and a reserved (reserved) field. However, currently, there is a lack of termination indication for two sensing types. Therefore, in this application, the DMG SBP termination control field may further include at least one of a terminate all coordinated bistatic setups (terminate all coordinated bistatic setups) field and a terminate all monostatic setups (terminate all monostatic setups) field. Each of the two fields occupies one bit, one is used to indicate whether to terminate all bistatic with coordination setups, and the other is used to indicate whether to terminate all monostatic setups. FIG. 10 is specifically a diagram of a DMG SBP termination control field according to this application. Information carried in the terminate all coordinated bistatic setups field and the terminate all monostatic setups field may be eleventh information.

Manner 3: A last report is used to indicate to terminate SBP.

Specifically, one bit may be used in a DMG SBP Report frame to indicate the last report, that is, a last SBP report. After receiving an indication of the last report, the DMG SBP initiator automatically terminates DMG SBP, and after sending the indication of the last report, the DMG SBP responder automatically terminates the DMG SBP. For content and a format of the DMG SBP Report frame, refer to the method 300.

It should be understood that Manner 1 to Manner 3 in the method 300 may be separately implemented, or may be combined with each other in some scenarios. This is not limited in this application.

It should be further understood that the method 200, the method 300, and the method 400 may be separately implemented, or may be combined with each other. This is not limited.

In addition, the frame format, the field name, the field length, and the like in this application are merely examples for description. The frame format, the field name, the field length, and the like may alternatively be other formats provided that corresponding information can be carried or indicated. A specific format is not limited in this application. For example, the DMG SBP expiry exponent field in Table 3 is 4 bits. However, the length of the field may also be another value, for example, 2 bits or 8 bits. In addition, in this application, fields in any table are not mandatory. In some cases, the message provided in this application may include only a part of the fields provided in this specification. Similarly, the fields shown in FIG. 6, FIG. 8, and FIG. 10 are not mandatory. In some cases, only a part of the fields shown in the figures may be included.

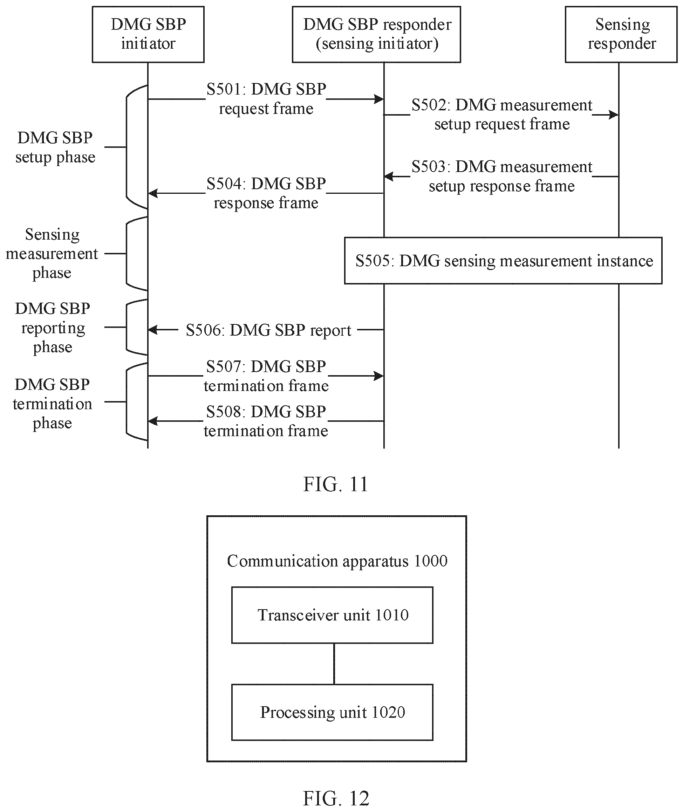

FIG. 11 is a schematic flowchart of a sensing method 500 according to an embodiment of this application. The method 500 may be considered as a specific implementation of a combination of the method 200, the method 300, and the method 400. For content that is not described in detail in the method 500, refer to the method 200, the method 300, and the method 400.

S501: ADMG SBP initiator sends a DMG SBP Request frame (an example of a third message) to a DMG SBP responder, where the frame includes a configuration parameter related to a DMG SBP procedure. For details about the configuration parameter, refer to Table 1 to Table 8.

S502: After the DMG SBP Request frame is received, the DMG SBP responder sends a DMG sensing measurement setup request frame (an example of a fourth message) to one or more sensing responders.

The DMG sensing measurement setup request frame includes a sensing measurement setup identifier and one or more sensing measurement setup parameters elements.

S503: The one or more sensing responders send a DMG sensing measurement setup response frame (an example of a first message) to the DMG SBP responder.

Each DMG sensing measurement setup response frame includes a status code (status code) in response to a sensing measurement setup request, to indicate whether a sensing measurement setup corresponding to this sensing responder is successful. The DMG sensing measurement setup response frame may further include the one or more sensing measurement setup parameters elements.

S504: The DMG SBP responder replies with an SBP response (SBP response) frame (an example of a second message).

If a result of one or more DMG sensing measurement setup response frames complies with a configuration parameter in the DMG SBP initiator, the SBP response frame may carry a status code indicating that an SBP request is accepted, that is, the status code=success. Otherwise, the status code=fail, and this indicates that SBP fails to be established.

S501 to S504 may be referred to as a DMG SBP setup (DMG SBP setup) phase and a sensing measurement setup phase.

S505: The sensing responder and the DMG SBP responder perform a sensing measurement.

The sensing measurement includes that one of the sensing responder and the DMG SBP responder sends a sensing PPDU, and the other obtains a sensing measurement result. If the sensing responder obtains the sensing measurement result as a sensing receiver, the sensing responder may send the sensing measurement result to the DMG SBP responder.

S506: After obtaining the sensing measurement result, the SBP responder feeds back the sensing measurement result to the DMG SBP initiator by using a DMG SBP report (DMG SBP report) frame.

S506 is a DMG SBP reporting phase. For a specific process of S506, refer to the method 300.

After S506, the DMG SBP initiator and the DMG SBP responder may terminate a DMG SBP procedure. For details, refer to the method 400. FIG. 5 shows Manner 2 in the method 400, including S507 and S508.

S507: The DMG SBP initiator sends a DMG SBP Termination frame to terminate the DMG SBP procedure.

S508: The DMG SBP responder sends the DMG SBP Termination frame to terminate the DMG SBP procedure.

The foregoing describes the foregoing method embodiments in embodiments of this application, and the following briefly describes corresponding apparatus embodiments. It should be understood that descriptions of the apparatus embodiments correspond to the descriptions of the method embodiments. Therefore, for a part that is not described in detail, refer to the foregoing method embodiments.

FIG. 12 is a diagram of a communication apparatus according to an embodiment of this application. As shown in FIG. 12, an apparatus 1000 may include a transceiver unit 1010 and/or a processing unit 1020. The transceiver unit 1010 may communicate with the outside, and the processing unit 1020 is configured to process data/information. The transceiver unit 1010 may also be referred to as a communication interface or a communication unit.

In a possible implementation, the apparatus 1000 may be the SBP responder in the method 200, or may be a chip configured to implement a function of the SBP responder in the method 200. The apparatus 1000 may implement procedures performed by the SBP responder in the method 200, and the transceiver unit 1010 is configured to perform sending/receiving-related operations of the SBP responder in the method 200.

For example, the transceiver unit 1010 is configured to receive a first message from a sensing responder, where the first message includes information about whether the sensing responder accepts a first sensing measurement setup; and the transceiver unit 1010 is further configured to send a second message to an SBP initiator, where the second message includes information about whether first SBP is successfully established, and the second message is determined based on the first message.

Optionally, in this implementation, the apparatus 1000 further includes a processing unit 1020. The processing unit 1020 may be configured to perform processing-related operations of the SBP responder in the method 200.

It should be understood that the foregoing content is merely used an example for understanding. The apparatus 1000 can further implement other steps, actions, or methods related to the SBP responder in the method 200. Details are not described herein.

In another possible implementation, the apparatus 1000 may implement a procedure performed by the SBP initiator in the method 200, and the transceiver unit 1010 is configured to perform sending/receiving-related operations of the SBP initiator in the method 200.

For example, the transceiver unit 1010 is configured to send a third message to an SBP responder, where the third message is used to request to establish first SBP, and the third message includes a configuration parameter of a first sensing measurement setup; and the transceiver unit 1010 is further configured to receive a second message from the SBP responder, where the second message includes information about whether the first SBP is successfully established, the second message is determined based on a first message, and the first message includes information about whether a sensing responder accepts the first sensing measurement setup.

Optionally, in this implementation, the apparatus 1000 may further include a processing unit 1020. The processing unit 1020 may be configured to perform processing-related operations of the SBP initiator in the method 200.

It should be understood that the foregoing content is merely used an example for understanding. The apparatus 1000 can further implement other steps, actions, or methods related to the SBP initiator in the method 200. Details are not described herein.

In another possible implementation, the apparatus 1000 may implement a procedure performed by the SBP responder in the method 300, the method 400, or the method 500 in the foregoing method embodiments. For related steps and actions performed by the apparatus 1000, refer to the method 300, the method 400, or the method 500. Details are not described herein again.

In another possible implementation, the apparatus 1000 may implement a procedure performed by the SBP initiator in the method 300, the method 400, or the method 500 in the foregoing method embodiments. For related steps and actions performed by the apparatus 1000, refer to the method 300, the method 400, or the method 500. Details are not described herein again.

It should be understood that the apparatus 1000 herein is embodied in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

The apparatus 1000 has functions of implementing corresponding steps performed by the SBP responder in the foregoing methods. Alternatively, the apparatus 1000 has functions of implementing corresponding steps performed by the SBP responder in the foregoing methods. The function may be implemented by hardware, or may be implemented by hardware executing corresponding software. The hardware or software includes one or more modules corresponding to the foregoing function. For example, a transceiver unit may be replaced with a transceiver (for example, a sending unit in the transceiver unit may be replaced with a transmitter, and a receiving unit in the transceiver unit may be replaced with a receiver), and another unit like a processing unit may be replaced with a processor, to separately perform a sending/receiving operation and a related processing operation in the method embodiments.

In addition, the transceiver unit may alternatively be a transceiver circuit (for example, may include a receiving circuit and a sending circuit), and the processing unit may be a processing circuit. In this embodiment of this application, the apparatus 1000 may be the SBP responder or the SBP initiator in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

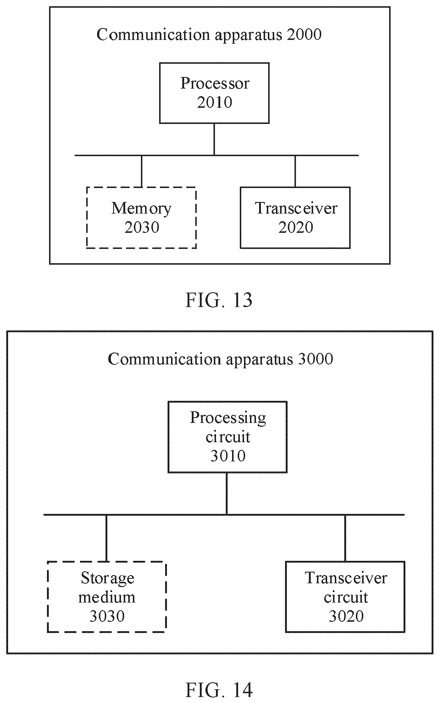

FIG. 13 is another diagram of a structure of a communication apparatus according to an embodiment of this application. As shown in FIG. 13, the communication apparatus 2000 includes at least one processor 2010 and a transceiver 2020. The processor 2010 is coupled to a memory, and is configured to execute instructions stored in the memory, to control the transceiver 2020 to send a signal and/or receive a signal. Optionally, the communication apparatus 2000 further includes the memory 2030, configured to store the instructions.

It should be understood that the processor 2010 and the memory 2030 may be combined into one processing apparatus, and the processor 2010 is configured to execute program code stored in the memory 2030 to implement the foregoing functions. During specific implementation, the memory 2030 may alternatively be integrated into the processor 2010, or may be independent of the processor 2010.

It should be further understood that the transceiver 2020 may include a receiver (or referred to as a receiver) and a transmitter (or referred to as a transmitter). The transceiver 2020 may further include an antenna, and there may be one or more antennas. The transceiver 1020 may be a communication interface or an interface circuit.

When the communication apparatus 2000 is a chip, the chip includes a transceiver unit and a processing unit. The transceiver unit may be an input/output circuit or a communication interface. The processing unit may be a processor, a microprocessor, or an integrated circuit integrated on the chip.

An embodiment of this application further provides a processing apparatus, including a processor and an interface. The processor may be configured to perform the method 200, the method 300, the method 400, or the method 500 in the foregoing method embodiments.

It should be understood that the processing apparatus may be a chip. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

FIG. 14 is still another diagram of a structure of a communication apparatus according to an embodiment of this application. As shown in FIG. 14, the apparatus 3000 includes a processing circuit 3010 and a transceiver circuit 3020. The processing circuit 3010 and the transceiver circuit 3020 communicate with each other through an internal connection path. The processing circuit 3010 is configured to execute instructions to control the transceiver circuit 3020 to send a signal and/or receive a signal.

Optionally, the apparatus 3000 may further include a storage medium 3030. The storage medium 3030 communicates with the processing circuit 3010 and the transceiver circuit 3020 through an internal connection path. The storage medium 3030 is configured to store instructions, and the processing circuit 3010 may execute the instructions stored in the storage medium 3030.

In a possible implementation, the apparatus 3000 is configured to implement a procedure corresponding to the SBP responder in the foregoing method embodiments.

In another possible implementation, the apparatus 3000 is configured to implement a procedure corresponding to the SBP initiator in the foregoing method embodiments.

According to the methods provided in embodiments of this application, this application further provides a computer program product. The computer program product includes computer program code. When the computer program code is run on a computer, the computer is enabled to perform the method in the embodiment shown in FIG. 5 or FIG. 9.

According to the method provided in embodiments of this application, this application further provides a computer-readable medium. The computer-readable medium stores program code. When the program code is run on a computer, the computer is enabled to perform the methods in the foregoing method embodiments.

According to the method provided in embodiments of this application, this application further provides a system, including the foregoing SBP responder and/or SBP initiator.

The term "at least one of..." in this specification indicates all or any combination of the listed items. For example, "at least one of A, B, and C" may indicate the following six cases: Only A exists, only B exists, only C exists, both A and B exist, both B and C exist, and A, B, and C all exist. In this specification, "at least one" means one or more. "A plurality of" means two or more.

The term "and/or" in this specification describes only an association relationship for describing associated objects and indicates that three relationships may exist. For example, A and/or B may indicate the following three cases: Only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information. The terms "include", "comprise", "have" and their variants all mean "include but are not limited to", unless otherwise specifically emphasized in another manner.

It should be understood that, in various embodiments of this application, first, second, and various numbers are merely for differentiation for ease of description, and are not for limiting the scope of embodiments of this application. For example, different information is differentiated.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A sensing method, comprising:
receiving, by a sensing by proxy SBP responder, a first message from a sensing responder, wherein the first message comprises information about whether the sensing responder accepts a first sensing measurement setup; and
sending, by the SBP responder, a second message to an SBP initiator, wherein the second message comprises information about whether first SBP is successfully established, and the second message is determined based on the first message.

2. The method according to claim 1, wherein the method further comprises:
receiving, by the SBP responder, a third message from the SBP initiator, wherein the third message is used to request to establish the first SBP, and the third message comprises a configuration parameter of the first sensing measurement setup; and
sending, by the SBP responder, a fourth message to the sensing responder, wherein the fourth message is used to initiate the first sensing measurement setup to the sensing responder, and the fourth message is determined based on the third message.

3. A sensing method, comprising:
sending, by a sensing by proxy SBP initiator, a third message to an SBP responder, wherein the third message is used to request to establish first SBP, and the third message comprises a configuration parameter of a first sensing measurement setup; and
receiving, by the SBP initiator, a second message from the SBP responder, wherein the second message comprises information about whether the first SBP is successfully established, the second message is determined based on a first message, and the first message comprises information about whether a sensing responder accepts the first sensing measurement setup.

4. The method according to claim 2 or 3, wherein the configuration parameter comprises first information, and the first information indicates that a type of the first SBP is bistatic with coordination.

5. The method according to claim 4, wherein the configuration parameter comprises second information, the second information indicates information about a first sensing responder and information about a second sensing responder, the first sensing responder is at least one that is of the sensing responders and that is used as a sensing transmitter, and the second sensing responder is at least one that is of the sensing responders and that is used as a sensing receiver.

6. The method according to claim 5, wherein
the information about the first sensing responder comprises at least one of the following:
a number of first sensing responders, whether the number of the first sensing responders needs to be met, an address of the first sensing responder, an identifier of the first sensing responder, a number of preferred first sensing responders, and a list of the preferred first sensing responders; and
the information about the second sensing responder comprises at least one of the following:
a number of second sensing responders, whether the number of the second sensing responders needs to be met, an address of the second sensing responder, an identifier of the second sensing responder, a number of preferred second sensing responders, and a list of the preferred second sensing responders.

7. The method according to claim 5 or 6, wherein the configuration parameter comprises third information, and the third information indicates a correspondence between the first sensing responder and the second sensing responder.

8. The method according to any one of claims 2 to 7, wherein the configuration parameter comprises fourth information, and the fourth information indicates that the type of the first SBP is monostatic with coordination.

9. The method according to claim 8, wherein the configuration parameter comprises fifth information, and the fifth information indicates the sensing responders to perform sensing measurements simultaneously or indicates the sensing responders to perform sensing measurements in sequence.

10. The method according to claim 8 or 9, wherein the configuration parameter comprises sixth information, and the sixth information indicates the SBP responder whether to participate in monostatic sensing.

11. The method according to any one of claims 2 to 10, wherein the configuration parameter comprises seventh information, and the seventh information indicates that the type of the first SBP is a monostatic type.

12. The method according to any one of claims 2 to 11, wherein the configuration parameter comprises eighth information, and the eighth information indicates information related to a feedback of a sensing measurement result.

13. The method according to claim 12, wherein the information related to the feedback of the sensing measurement result comprises at least one of the following:
feeding back after each measurement ends or feeding back after a plurality of measurements end;
feeding back a sensing measurement result of one sensing responder each time or feeding back sensing measurement results of a plurality of sensing responders each time;
feeding back whether a report comprises location configuration information of the sensing responder;
feeding back whether the report comprises an antenna orientation of the sensing responder; and
feeding back whether the report comprises a time when the sensing measurement occurs.

14. A communication apparatus, comprising:
a transceiver unit, configured to receive a first message from a sensing responder, wherein the first message comprises information about whether the sensing responder accepts a first sensing measurement setup; and
the transceiver unit is further configured to send a second message to an SBP initiator, wherein the second message comprises information about whether first SBP is successfully established, and the second message is determined based on the first message.

15. The communication apparatus according to claim 14, wherein the transceiver unit is further configured to:
receive a third message from the SBP initiator, wherein the third message is used to request to establish the first SBP, and the third message comprises a configuration parameter of the first sensing measurement setup; and
send a fourth message to the sensing responder, wherein the fourth message is used to initiate the first sensing measurement setup to the sensing responder, and the fourth message is determined based on the third message.

16. A communication apparatus, comprising:
a transceiver unit, configured to send a third message to an SBP responder, wherein the third message is used to request to establish first SBP, and the third message comprises a configuration parameter of a first sensing measurement setup; and
the transceiver unit is further configured to receive a second message from the SBP responder, wherein the second message comprises information about whether the first SBP is successfully established, the second message is determined based on a first message, and the first message comprises information about whether a sensing responder accepts the first sensing measurement setup.

17. The communication apparatus according to claim 15 or 16, wherein the configuration parameter comprises first information, and the first information indicates that a type of the first SBP is bistatic with coordination.

18. The communication apparatus according to claim 17, wherein the configuration parameter comprises second information, the second information indicates information about a first sensing responder and information about a second sensing responder, the first sensing responder is at least one that is of the sensing responders and that is used as a sensing transmitter, and the second sensing responder is at least one that is of the sensing responders and that is used as a sensing receiver.

19. The communication apparatus according to claim 18, wherein
the information about the first sensing responder comprises at least one of the following:
a number of first sensing responders, whether the number of the first sensing responders needs to be met, an address of the first sensing responder, an identifier of the first sensing responder, a number of preferred first sensing responders, and a list of the preferred first sensing responders; and
the information about the second sensing responder comprises at least one of the following:
a number of second sensing responders, whether the number of the second sensing responders needs to be met, an address of the second sensing responder, an identifier of the second sensing responder, a number of preferred second sensing responders, and a list of the preferred second sensing responders.

20. The communication apparatus according to claim 18 or 19, wherein the configuration parameter comprises third information, and the third information indicates a correspondence between the first sensing responder and the second sensing responder.

21. The communication apparatus according to any one of claims 15 to 20, wherein the configuration parameter comprises fourth information, and the fourth information indicates that the type of the first SBP is monostatic with coordination.

22. The communication apparatus according to claim 21, wherein the configuration parameter comprises fifth information, and the fifth information indicates the sensing responders to perform sensing measurements simultaneously or indicates the sensing responders to perform sensing measurements in sequence.

23. The communication apparatus according to claim 21 or 22, wherein the configuration parameter comprises sixth information, and the sixth information indicates the SBP responder whether to participate in monostatic sensing.

24. The communication apparatus according to any one of claims 15 to 23, wherein the configuration parameter comprises seventh information, and the seventh information indicates that the type of the first SBP is a monostatic type.

25. The communication apparatus according to any one of claims 15 to 24, wherein the configuration parameter comprises eighth information, and the eighth information indicates information related to a feedback of a sensing measurement result.

26. The communication apparatus according to claim 25, wherein the information related to the feedback of the sensing measurement result comprises at least one of the following:
feeding back after each measurement ends or feeding back after a plurality of measurements end;
feeding back a sensing measurement result of one sensing responder each time or feeding back sensing measurement results of a plurality of sensing responders each time;
feeding back whether a report comprises location configuration information of the sensing responder;
feeding back whether the report comprises an antenna orientation of the sensing responder; and
feeding back whether the report comprises a time when the sensing measurement occurs.

27. A sensing method, comprising:
starting, by a sensing by proxy SBP responder, a timer after a second message is sent or after a first SBP report frame is sent, wherein the second message comprises information about that first SBP is successfully established, and the first SBP is SBP between the SBP responder and an SBP initiator;
setting, by the SBP responder, start duration of the timer to first duration; and
terminating, by the SBP responder, the first SBP when the timer expires.

28. The method according to claim 27, wherein the first duration is a preset value.

29. A sensing method, comprising:
starting, by a sensing by proxy SBP initiator, a timer after a second message is received or after a first SBP report frame is received, wherein the second message comprises information about that first SBP is successfully established, and the first SBP is SBP between the SBP initiator and an SBP responder;
setting, by the SBP initiator, start duration of the timer to first duration; and
terminating, by the SBP initiator, the first SBP when the timer expires.

30. The method according to claim 29, wherein the first duration is a preset value.

31. A communication apparatus, comprising:
a transceiver unit, configured to start a timer after a second message is sent or after a first SBP report frame is sent, wherein the second message comprises information about that first SBP is successfully established, and the first SBP is SBP between the communication apparatus and an SBP initiator; and
a processing unit, configured to set start duration of the timer to first duration, wherein
the processing unit is further configured to terminate the first SBP when the timer expires.

32. The communication apparatus according to claim 31, wherein the first duration is a preset value.

33. A communication apparatus, comprising:
a transceiver unit, configured to start a timer after a second message is received or after a first SBP report frame is received, wherein the second message comprises information about that first SBP is successfully established, and the first SBP is SBP between the communication apparatus and an SBP responder; and
a processing unit, configured to set start duration of the timer to first duration, wherein
the processing unit is further configured to terminate the first SBP when the timer expires.

34. The communication apparatus according to claim 33, wherein the first duration is a preset value.

35. A communication apparatus, comprising:
a memory, configured to store computer instructions; and
a processor, configured to execute the computer instructions stored in the memory, to enable the communication apparatus to perform the method according to any one of claims 1 to 13 or claims 27 to 30.

36. A chip, comprising a processor and a memory, wherein the memory is configured to store a program or instructions, and when the program or the instructions are executed by the processor, the chip is enabled to perform the method according to any one of claims 1 to 13 or claims 27 to 30.

37. A computer-readable storage medium, wherein the computer-readable storage medium stores a computer program or instructions, and when the computer program or the instructions are executed, a computer is enabled to perform the method according to any one of claims 1 to 13 or claims 27 to 30.

38. A computer program product, comprising computer program code, wherein when the computer program code is run on a computer, the computer is enabled to implement the method according to any one of claims 1 to 13 or claims 27 to 30.
